# EUROPEAN PATENT APPLICATION

(11) **EP 4 811 084 A1**
(43) Date of publication of application: **23.09.2026**
(21) Application number: 24913325.7
(22) Date of filing: 24.10.2024
(51) Int. Cl.: G06F 3/041

(54) **ELECTRONIC DEVICE COMPRISING ONE OR MORE PROCESSING CIRCUITS FOR RECOGNITION OF INTENDED TOUCH INPUT, AND METHOD THEREFOR**

(30) Priority: 28.12.2023 KR 20230195671; 15.01.2024 KR 20240006334
(71) Applicant: Samsung Electronics Co., Ltd., Suwon-si, Gyeonggi-do 16677 (KR)
(72) Inventor: JUNG, Yoondo, Suwon-si Gyeonggi-do 16677 (KR); PARK, Jongdae, Suwon-si Gyeonggi-do 16677 (KR); KWAK, Sanghun, Suwon-si Gyeonggi-do 16677 (KR); YOO, Daehyun, Suwon-si Gyeonggi-do 16677 (KR); KO, Bongjun, Suwon-si Gyeonggi-do 16677 (KR); KIM, Euijin, Suwon-si Gyeonggi-do 16677 (KR)
(74) Representative: Gulde & Partner
(86) International application number: PCT/KR2024/016323
(87) International publication number: WO 2025/143488

(57) **Abstract**

An electronic device is described. The electronic device may comprise a processor including a processing circuit. The electronic device may comprise a touch-sensitive display comprising a display panel having a displaying region, a touch processing circuit, and a touch sensor for receiving touch contact on the displaying region. The touch processing circuit may be configured to generate first information about a first touch contact on the basis of signals from the touch sensor while the display panel is in a low power state or a power-off state. The touch processing circuit may be configured to generate second information about a second touch contact on the basis of signals from the touch sensor after the first touch contact is released while the display panel is in the low power state or the power-off state.

## Description

### [Technical Field]

The following descriptions relate to an electronic device including one or more processing circuitry for recognition of an intended touch input and a method thereof.

### [Background Art]

An electronic device may include touch circuitry arranged with respect to a display panel to execute a function in response to a finger or a stylus pen contacted on the display panel. For example, the touch circuitry may include a touch sensor for identifying the contact based on a capacitive method, a resistive method, an infra-red method, an acoustic method, and/or a pressure method, and processing circuitry for obtaining data through the touch sensor.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

An electronic device is described. The electronic device may include a processor including processing circuitry. The electronic device may include a touch sensitive display including a display panel having a displaying region, touch processing circuitry, and a touch sensor for receiving a touch contact with respect to the displaying region. The touch processing circuitry may be configured to, while the display panel is in a low power state or a power-off state, generate first information on a first touch contact based on signals from the touch sensor. The touch processing circuitry may be configured to, while the display panel is in the low power state or the power-off state, generate second information on a second touch contact based on signals from the touch sensor, after the first touch contact is released. The first processing circuitry may be configured to, while the display panel is in the low power state or the power-off state, based on a first touch size of the first information and a second touch size of the second information being within a first reference range, determine whether the second touch size is within a second reference range with respect to the first touch size. The first processing circuitry may be configured to, while the display panel is in the low power state or the power-off state, based on the second touch size being within the second reference range with respect to the first touch size, provide, to the processor, information on the first touch contact and the second touch contact as a double tap input.

A method is described. The method may be executed in an electronic device with a touch sensitive display including a display panel having a displaying region and a touch sensor for receiving a touch contact with respect to the displaying region. The method may include generating first information on a first touch contact, based on signals from the touch sensor, while the display panel is in a low power state or a power-off state. The method may include generating second information on a second touch contact based on signals from the touch sensor, after the first touch contact is released, while the display panel is in the low power state or the power-off state. The method may include, based on a first touch size of the first information and a second touch size of the second information being within a first reference range, determining whether the second touch size is within a second reference range with respect to the first touch size, while the display panel is in the low power state or the power-off state. The method may include obtaining information on the first touch contact and the second touch contact as a double tap input, based on the second touch size being within the second reference range with respect to the first touch size, while the display panel is in the low power state or the power-off state.

An electronic device is described. The electronic device may include memory storing instructions. The electronic device may include a touch sensitive display including a display panel having a displaying region, and a touch sensor for receiving a touch contact with respect to the displaying region. The electronic device may include one or more processors including one or more processing circuitry. The instructions, when executed individually or collectively by the one or more processors while the display panel is in a low power state or a power-off state, may cause the electronic device to generate first information on a first touch contact based on signals from the touch sensor. The instructions, when executed individually or collectively by the one or more processors while the display panel is in the low power state or the power-off state, may cause the electronic device to generate, after the first touch contact is released, second information on a second touch contact based on signals from the touch sensor. The instructions, when executed individually or collectively by the one or more processors while the display panel is in the low power state or the power-off state, may cause the electronic device to provide feedback for a double tap input, based on a first touch size of the first information being within the first reference range, and a second touch size of the second information being within the first reference range and within a second reference range included in the first reference range. The instructions, when executed individually or collectively by the one or more processors while the display panel is in the low power state or the power-off state, may cause the electronic device to provide feedback for a single tap input, based on the first touch size being within the first reference range and the second touch size being within the first reference range and being outside the second reference range. The second reference range may be narrower than or equal to the first reference range, according to the first touch size.

A method is described. The method may be executed in an electronic device with a touch sensitive display including a display panel having a displaying region, and a touch sensor for receiving a touch contact with respect to the displaying region. The method may include generating first information on a first touch contact based on signals from the touch sensor, while the display panel is in a low power state or a power-off state. The method may include, after the first touch contact is released, generating second information on second touch contact points based on signals from the touch sensor, while the display panel is in the low power state or the power-off state. The method may include providing feedback for a double tap input, based on a first touch size of the first information being within the first reference range, and a second touch size of the second information being within the first reference range and being within a second reference range included in the first reference range, while the display panel is in the low power state or the power-off state. The method may include providing feedback for a single tap input, based on the first touch size being within the first reference range and the second touch size being within the first reference range and being outside the second reference range, while the display panel is in the low power state or the power-off state. The second reference range may be narrower than or equal to the first reference range, according to the first touch size.

According to an embodiment of the present disclosure, a non-transitory computer-readable recording medium (or storage medium) may store at least one command and/or instructions, when executed, that cause an electronic device to perform the above-described method or an operation of the electronic device.

### [Description of the Drawings]

FIG. 1 illustrates an exemplary situation in which an unintended touch input occurs.
FIG. 2 is a simplified block diagram of an exemplary electronic device.
FIG. 3 is a flowchart illustrating an exemplary method executed in an electronic device to recognize an intended touch input.
FIG. 4 is a chart illustrating an example of a second reference range.
FIG. 5 illustrates an example of a length available to indicate a touch size.
FIG. 6 illustrates an example of an unintended double tap input.
FIG. 7 is a flowchart illustrating an exemplary method of determining whether each of a first touch size and a second touch size is within a first reference range, before comparing the first touch size and the second touch size to recognize an intended double tap input.
FIG. 8 is a flowchart illustrating an exemplary method of comparing first time and second time, before comparing a first touch size and a second touch size to recognize an intended double tap input.
FIG. 9 is a flowchart illustrating an exemplary method of comparing a representative position of first points of contact and a representative position of second points of contact, before comparing a first touch size and a second touch size to recognize an intended double tap input.
FIG. 10 illustrates an example of a central region and a peripheral region set to determine a second reference range.
FIG. 11 illustrates an example of second points of contact on at least a portion of a peripheral region.
FIG. 12 illustrates an example of a central region and a peripheral region of a foldable electronic device set to determine a second reference range.
FIG. 13 is a flowchart illustrating an exemplary method of providing feedback for a double tap input.
FIG. 14 illustrates an example of feedback for a double tap input.
FIG. 15 is a flowchart illustrating an exemplary method of checking whether a threshold time elapses to provide feedback for a double tap input.
FIG. 16 is a block diagram of an electronic device in a network environment according to various embodiments.
FIG. 17 is a block diagram of a display module according to various embodiments.

### [Mode for Invention]

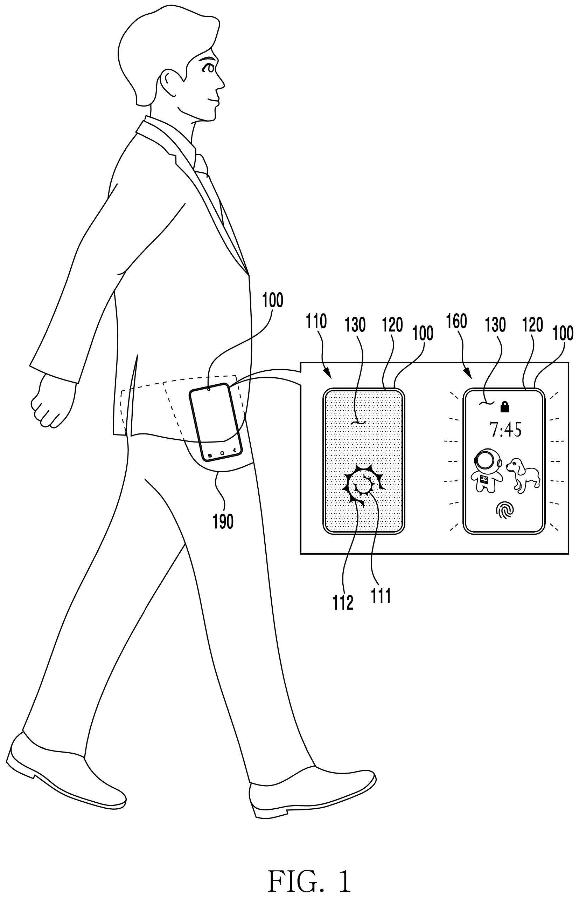

FIG. 1 illustrates an exemplary situation in which an unintended touch input occurs.

Referring to FIG. 1, an electronic device 100 may be a mobile device or a portable device having a display panel 120 visible from the outside. For example, the display panel 120 may include a region 130 (or a displaying region 130) for receiving a touch input through a touch sensor of the electronic device 100.

The electronic device 100 may be positioned in a pocket 190. For example, the electronic device 100 in the pocket 190 may be carried. Since use of the electronic device 100 carried in the pocket 190 is impossible, the display panel 120 may operate in a low power state (or lower power state) (or a state for lower power consumption) or may be in a power-off state, to reduce power consumption. For example, even when the display panel 120 is in the low power state or the power-off state, the touch sensor may be activated to receive a touch input on (or over) the region 130. As a non-limiting example, the touch sensor may be activated to receive a touch input on the region 130 for releasing the low power state or the power-off state, while the display panel 120 is in the low power state or the power-off state.

Since the electronic device 100 is carried in the pocket 190, an unintended contact may occur on the region 130. For example, as in a state 110, while the electronic device 100 is positioned in the pocket 190, an unintended contact 111 (or a touch contact 111) and an unintended contact 112 (or a touch contact 112) may occur on the region 130. The touch sensor activated for interaction with a user while the electronic device 100 is positioned in the pocket 190 may obtain, in response to the unintended contact 111, first data on first points of contact on a portion of the region 130, and obtain, in response to the unintended contact 112, second data on second points of contact on a portion of the region 130. For example, when at least a portion of the first points of contact and at least a portion of the second points of contact are recognized (or processed) (or identified) (or determined) (or checked) as a touch input (or an intended touch input) according to the first data and the second data, the electronic device 100 may provide feedback for the touch input. For example, the display panel 120 may display a screen to provide feedback for the touch input, as in a state 160 changed from the state 110, even though the electronic device 100 is carried in the pocket 190. For example, since a display of the screen is executed according to the unintended contact 111 and the unintended contact 112, the display of the screen may be perceived as a malfunction of the electronic device 100. For example, since the display of the screen is executed according to the unintended contact 111 and the unintended contact 112, the display of the screen may be (fully) a waste of power.

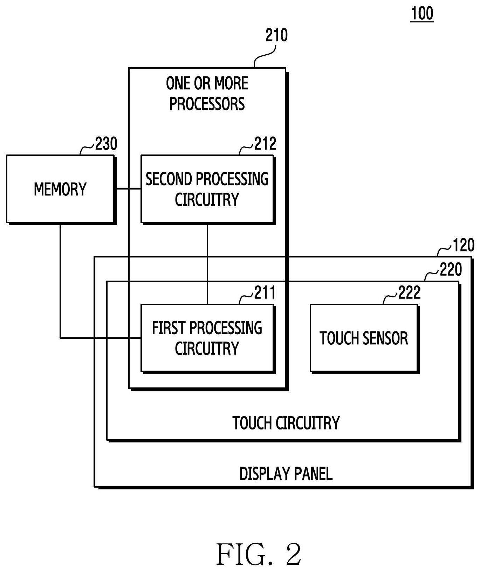

An electronic device 100 to be exemplified below may process the first data and the second data to reduce (or prevent) (or refrain from) (or block) providing feedback in response to the unintended contact 111 and the unintended contact 112. For example, the electronic device 100 may include components for processing the first data and the second data. The components are exemplified in a description of FIG. 2.

FIG. 2 is a simplified block diagram of an exemplary electronic device.

Referring to FIG. 2, an electronic device 100 may be one of various types of electronic devices, such as a laptop, a smartphone having various form factors (e.g., a bar-type smartphone, a foldable-type smartphone, or a slidable (or rollable) type smartphone), a tablet, a cellular phone, and other similar computing devices. Components illustrated in FIG. 2, their relationships, and their functions (or features) are merely exemplary and do not limit implementations described or claimed in this document. The electronic device 100 may be referred to as a mobile device, a user device, a multi-function device, or a portable device.

The electronic device 100 may include components including a display panel 120, one or more processors 210, touch circuitry 220, and memory 230. The components are merely exemplary. For example, the electronic device 100 may include one or more other components (e.g., power management integrated circuitry (PMIC) and/or a rechargeable battery). For example, some components may be omitted from the electronic device 100. For example, some components may be integrated into one component.

The one or more processors 210 may be implemented as one or more integrated circuitry (IC) chips, and execute various data processing. For example, the one or more processors 210 may include at least one electrical circuitry, and individually or collectively perform distributed processing of instructions (or program, data, and the like) stored in the memory 230. The one or more processors 210 may include a processor assembly including one or more processing circuitry. For example, the one or more processors 210 may include any processing circuitry operative to control components (e.g., the display panel 120 and/or the touch circuitry 220) and operations of the electronic device 100.

The one or more processors 210 may include first processing circuitry 211 (or touch processing circuitry 211) and second processing circuitry 212. The second processing circuitry 212 may be referred to as processing circuitry 212 in this document. As a non-limiting example, the first processing circuitry 211 may be included in the touch circuitry 220. The second processing circuitry 212 may be referred to as a processor 212. The second processing circuitry 212 (e.g., application processor (AP)) may be implemented as a system on chip (SoC) (e.g., a single chip or a chipset). For example, the second processing circuitry 212 may be implemented as multiple cores (or at least one core circuitry), multiple chips, or multiple chipsets. For example, the second processing circuitry 212 may include a central processing unit (CPU) (e.g., including central processing circuitry). For example, the second processing circuitry 212 may include a memory controller (e.g., including memory control circuitry) connected to the memory 230 and/or a storage controller (e.g., including storage control circuitry) connected to the memory 230.

The one or more processors 210 may be configured to perform (or execute) individually and/or collectively various functions exemplified above and/or to be exemplified below. For example, the one or more processors 210 may cause other components (e.g., the display panel 120 and the touch circuitry 220) of the electronic device 100 to perform various operations by executing instructions stored in the memory 230.

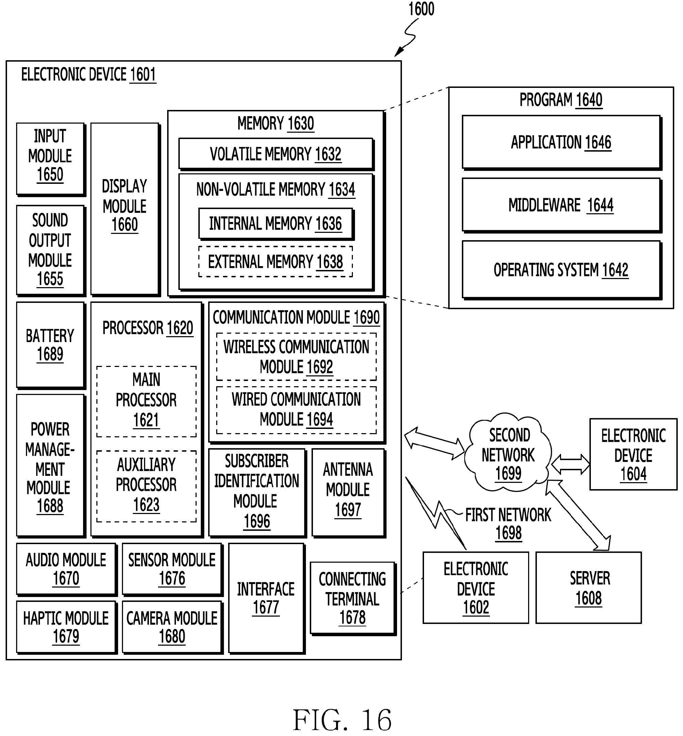

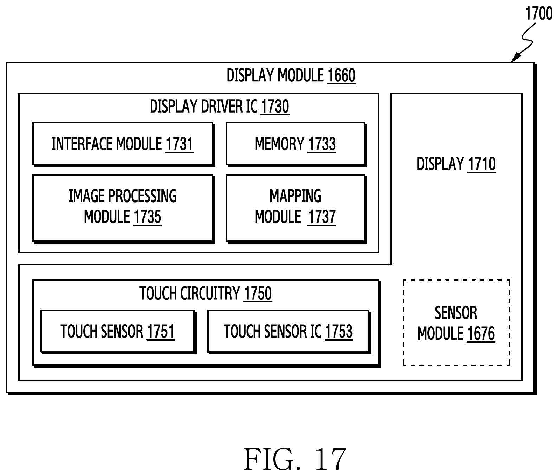

The one or more processors 210 may include at least a portion of a processor 1620 of FIG. 16. The one or more processors 210 may include at least a portion of a touch sensor IC 1753 of FIG. 17. As a non-limiting example, the first processing circuitry 211 may correspond to at least a portion of the touch sensor IC 1753 of FIG. 17, and the second processing circuitry 212 may correspond to at least a portion of the processor 1620 of FIG. 16.

The display panel 120 may be used to display visual information (e.g., an image, a screen, and/or a visual object). For example, the display panel 120 may have a displaying region (e.g., the region 130) capable of receiving a touch input. For example, a touch sensor 222 and the display panel 120 may be included in a touch sensitive display of the electronic device 100. For example, a plurality of states may be defined (or set) in the electronic device 100 for the display panel 120. For example, the plurality of states may include a normal power state obtaining normal power for a display of the visual information. For example, the plurality of states may include a low power state (or a state for lower power consumption) obtaining a lower power for the display of the visual information. For example, brightness of a screen displayed on the display panel 120 operating in the low power state may be (typically) darker than brightness of a screen displayed on the display panel 120 operating in the normal power state. As a non-limiting example, the display panel 120 may operate in the low power state for an always on display (AOD) function. For example, the plurality of states may include a power-off state. For example, the power-off state may include a state in which a source voltage and/or a gate voltage for displaying a screen on the display panel 120 are not provided. For example, while the display panel 120 is in the power-off state, a driving voltage (e.g., VDD and/or VSS) for the display panel 120 may be provided to the display panel 120. For example, the power-off state may include a state in which booting of the display panel 120 is completed.

The touch circuitry 220 may include first processing circuitry 211 and a touch sensor 222. As a non-limiting example, at least a portion of the touch circuitry 220 may be included in the display panel 120.

The first processing circuitry 211 may control the touch sensor 222. For example, the first processing circuitry 211 may process signals or data obtained (or received) through the touch sensor 222. The first processing circuitry 211 may provide information to second processing circuitry 212 to provide feedback for a touch input received through the touch sensor 222. For example, the first processing circuitry 211 may provide, to the second processing circuitry 212, information obtained according to processing of the data (e.g., data obtained through the touch sensor 222). As a non-limiting example, the first processing circuitry 211 may include at least a portion of the touch sensor IC 1753.

The touch sensor 222 may be used to obtain data on an external object positioned on (and/or over) the display panel 120. For example, the touch sensor 222 may be included in the display panel 120 (or may be positioned on the display panel 120) to provide a region (e.g., the region 130) of the display panel 120 capable of receiving a touch input. For example, the touch sensor 222 may be configured to obtain data on points of contact on at least a portion of the region.

The memory 230 may include one or more storage mediums (or one or more storage devices). For example, the one or more storage mediums may include a permanent memory (e.g., non-volatile memory) such as a hard drive, a flash memory, or a read-only memory (ROM), a semi-permanent memory (e.g., volatile memory) such as a random access memory (RAM), any other suitable type of storage (or a storage assembly), or any combination thereof. The memory 230 may include a cache memory, which is one or more different types of memory used to temporarily store data for a function (or feature) of the electronic device 100. As a non-limiting example, the cache memory may be included in the one or more processors 210 (e.g., the first processing circuitry 211 and/or the second processing circuitry 212). The memory 230 may be fixedly embedded in the electronic device 100, or may be incorporated onto one or more suitable types of components (e.g., a subscriber identity module (SIM) card and/or a secure digital (SD) card) that may be repeatedly inserted into and removed from the electronic device 100.

For example, the memory 230 may store one or more software applications such as an operating system (or system) software application, a firmware software application, a driver software application, a plugin (e.g., an add-in, an add-on, and/or an applet) software application, and/or any other suitable software applications. For example, the one or more software applications may include instructions executable individually and/or collectively by one or more processors 210. For example, the memory 230 may store instructions callable by an application programming interface (API). For example, the memory 230 may store instructions in a library.

For example, the memory 230 may include a memory assembly including one or more storage mediums. For example, the memory 230 may include at least a portion of memory 1630 of FIG. 16, or may correspond to at least a portion of the memory 1630 of FIG. 16.

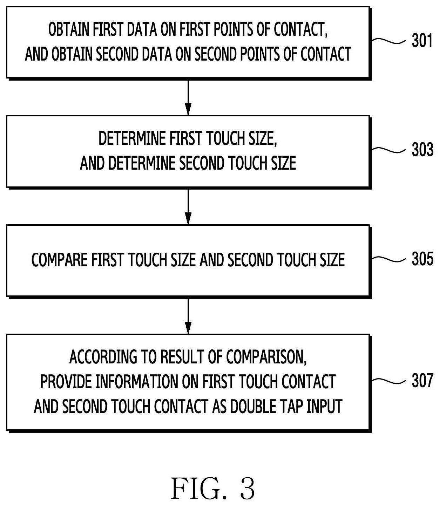

The electronic device 100 may reduce providing feedback for a touch input according to an unintended contact (e.g., the unintended contact 111 and/or the unintended contact 112) occurring on at least a portion of the region (e.g., the region 130) of the display panel 120 capable of receiving a touch input, by using at least a portion of the components exemplified in description of FIG. 2. An operation for reducing providing feedback for a touch input according to the unintended contact occurring on at least a portion of the region is exemplified in a description of FIG. 3.

FIG. 3 is a flowchart illustrating an exemplary method executed in an electronic device to recognize an intended touch input.

Referring to FIG. 3, in operation 301, the first processing circuitry 211 may obtain, through the touch sensor 222, first data on first points of contact on a portion of a region (e.g., the region 130) in the display panel 120 capable of receiving a touch input, and obtain second data on second points of contact on a portion of the region, after the first points of contact are released (or after obtaining the first data). For example, the first points of contact may be caused according to a first touch contact between an external object and the region (e.g., the region 130). For example, the second points of contact may be caused according to a second touch contact between an external object and the region. For example, the first points of contact may be caused while the display panel 120 is in the low power state or the power-off state. For example, the second points of contact may be caused while the low power state or the power-off state is maintained after the first points of contact are released.

As a non-limiting example, the first data may indicate a change of capacitance measured (or calculated) (or obtained) (or identified) at a position of each of the first points of contact. As a non-limiting example, the second data may indicate a change of capacitance measured at a position of each of the second points of contact. For example, the first data may be received or obtained while the display panel 120 is in the low power state or the power-off state. For example, the second data may be received or obtained while the low power state or the power-off state is maintained after the first data is obtained.

In operation 303, the first processing circuitry 211 may determine a first touch size using the first data, and determine a second touch size using the second data. For example, each of the first touch size and the second touch size may be determined while the display panel 120 is in the low power state or the power-off state. For example, the first processing circuitry 211 may generate first information on the first touch contact, and generate second information on the second touch contact after the first touch contact is released. The first information may include information on the first touch size (or information indicating the first touch size), and the second information may include information on the second touch size (or information indicating the second touch size).

For example, the first touch size may indicate a first touch area of a region occupied by at least a portion of the first points of contact (or formed by at least a portion of the first points of contact) causing a change of capacitance greater than a threshold. For example, the first processing circuitry 211 may determine the first touch area calculated using the first data as the first touch size. For example, the first touch size may indicate a width of a region occupied by at least a portion of the first points of contact causing a change of capacitance greater than the threshold. For example, the first processing circuitry 211 may determine the width calculated using the first data as the first touch size. For example, the first touch size may indicate a height of a region occupied by at least a portion of the first points of contact causing a change of capacitance greater than the threshold. For example, the first processing circuitry 211 may determine the height calculated using the first data as the first touch size. For example, the first touch size may indicate the number of at least a portion of the first points of contact causing a change of capacitance greater than the threshold. For example, the first processing circuitry 211 may determine the number calculated using the first data as the first touch size. However, it is not limited thereto.

For example, the second touch size may indicate a second touch area of a region occupied by at least a portion of the second points of contact (or formed by at least a portion of the second points of contact) causing a change of capacitance greater than a threshold. For example, first processing circuitry 211 may determine the second touch area calculated using the second data as the second touch size. For example, the second touch size may indicate a width of a region occupied by at least a portion of the second points of contact causing a change of capacitance greater than the threshold. For example, the first processing circuitry 211 may determine the width calculated using the second data as the second touch size. For example, the second touch size may indicate a height of a region occupied by at least a portion of the second points of contact causing a change of capacitance greater than the threshold. For example, the first processing circuitry 211 may determine the height calculated using the second data as the second touch size. For example, the second touch size may indicate the number of at least a portion of the second points of contact causing a change of capacitance greater than the threshold. For example, the first processing circuitry 211 may determine the number calculated using the second data as the second touch size. However, it is not limited thereto.

As a non-limiting example, the first touch size may be determined after the first points of contact are released. As a non-limiting example, the second touch size may be determined after the second points of contact are released.

FIG. 3 illustrates executing operation 303 after executing operation 301, but this is merely exemplary. For example, the first processing circuitry 211 may determine the first touch size (or generate (or obtain) the first information) in response to obtaining the first data, before obtaining the second data, and determine the second touch size (or generate (or obtain) the second information) in response to obtaining the second data. As another example, the first processing circuitry 211 may determine the first touch size (or generate (or obtain) the first information) while the second data is obtained, in response to obtaining the first data, and determine the second touch size (or generate (or obtain) the second information), in response to obtaining the second data.

As a non-limiting example, operation 303 may be executed by the second processing circuitry 212. For example, in a case that operation 303 is executed by the second processing circuitry 212, the first processing circuitry 211 may respectively provide the first data and the second data to the second processing circuitry 212, in response to respectively obtaining the first data and the second data. For example, the second processing circuitry 212 may respectively determine the first touch size and the second touch size (or generate the first information and the second information), by using the first data and the second data respectively obtained from the first processing circuitry 211.

In operation 305, the first processing circuitry 211 may compare the first touch size and the second touch size. For example, operation 305 may be executed to determine whether to recognize the first touch contact and the second touch contact as a touch input (e.g., a double tap input) (intended by a user). For example, since a probability that the first touch contact and the second touch contact are not intended by a user increases as a difference between the first touch size and the second touch size increases, the first processing circuitry 211 may compare the first touch size and the second touch size. For example, since a probability that the first touch contact and the second touch contact are intended by a user increases as the difference decreases, the first processing circuitry 211 may compare the first touch size and the second touch size.

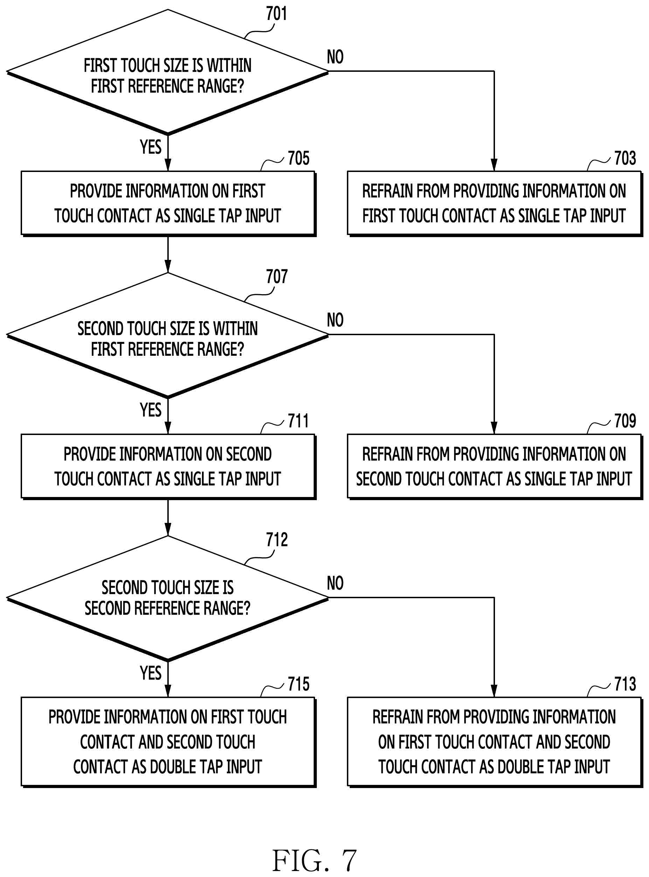

As a non-limiting example, comparing the first touch size and the second touch size may be executed based on recognizing the first touch contact as a single tap input and recognizing the second touch contact as a single tap input. For example, the first processing circuitry 211 may determine or check or identify whether each of the first touch size and the second touch size is within a first reference range, before comparing the first touch size and the second touch size. For example, the first reference range may be used or defined in the electronic device 100 to determine whether to recognize a touch contact on a region of the display panel 120 capable of receiving a touch input as a single tap input (intended by a user). As a non-limiting example, that each of the first touch size and the second touch size is within the first reference range may indicate that each of the first touch size and the second touch size is between an area of a circle with a diameter of about 4 millimeter (mm) and an area of a circle with a diameter of about 25 (mm). For example, the first processing circuitry 211 may compare the first touch size and the second touch size, based on the first touch size within the first reference range and the second touch size within the first reference range. For example, the first processing circuitry 211 may refrain from (or may not execute) comparing the first touch size and the second touch size, based on the first touch size outside the first reference range and/or the second touch size outside the first reference range. For example, comparing the first touch size and the second touch size may be executed on a condition that both the first touch size and the second touch size are within the first reference range. For example, comparing the first touch size and the second touch size may not be executed on a condition that any one of the first touch size and the second touch size is outside the first reference range. Operations related to determining whether the first touch size is within the first reference range and determining whether the second touch size is within the second reference range will be exemplified in a description of FIG. 7.

For example, the first processing circuitry 211 may determine whether the second touch size is within a second reference range (with respect to the first touch size), by comparing the first touch size within the first reference range and the second touch size within the first reference range. For example, the second reference range may be used or defined in the electronic device 100 to determine whether to recognize the first touch contact and the second touch contact as a double tap input (intended by a user). As a non-limiting example, the second reference range may be changed according to the first touch size, unlike the first reference range which is a fixed range. As a non-limiting example, the first reference range is fixed regardless of the first touch size (or independently of the first touch size and the second touch size), whereas the second reference range may be changed according to the first touch size.

For example, the second reference range may vary according to the first touch size. For example, the second reference range when the first touch size is within a central range (e.g., a range between a value corresponding to an area of a circle with a diameter of about 10 (mm) and a value corresponding to an area of a circle with a diameter of about 20 (mm)) of the first reference range may be partially different from the second reference range when the first touch size is within a first peripheral range (e.g., a range between a value corresponding to an area of a circle with a diameter of about 4 (mm) and a value corresponding to an area of a circle with a diameter of about 10 (mm)) of the first reference range. For example, the second reference range when the first touch size is within the central range of the first reference range may be partially different from the second reference range when the first touch size is within a second peripheral range (e.g., a range between a value corresponding to an area of a circle with a diameter of about 20 (mm) and a value corresponding to an area of a circle with a diameter of about 25 (mm)) of the first reference range. For example, in a case that the first touch size corresponds to an area of a circle with a diameter of 10 (mm) within the central range of the first reference range, the second reference range may be determined as a range between a value corresponding to an area of a circle with a diameter of about 4 (mm) and a value corresponding to an area of a circle with a diameter of about 25 (mm). As another example, in a case that the first touch size corresponds to an area of a circle with a diameter of 4 (mm) within the first peripheral range of the first reference range, the second reference range may be determined as a range between a value corresponding to an area of a circle with a diameter of about 4 (mm) and a value corresponding to an area of a circle with a diameter of about 20 (mm). As still another example, in a case that the first touch size corresponds to an area of a circle with a diameter of about 20 (mm) within the second peripheral range of the first reference range, the second reference range may be determined as a range between a value corresponding to an area of a circle with a diameter of about 10 (mm) and a value corresponding to an area of a circle with a diameter of about 25 (mm). As still another example, in a case that the first touch size corresponds to an area of a circle with a diameter of about 25 (mm) within the second peripheral range of the first reference range, the second reference range may be determined as a range between a value corresponding to an area of a circle with a diameter of about 10 (mm) and a value corresponding to an area of a circle with a diameter of about 25 (mm).

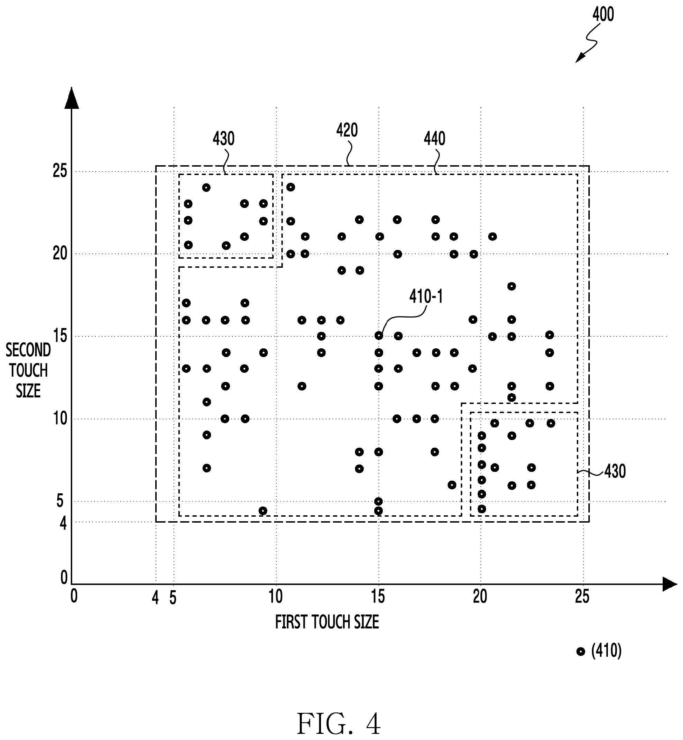

The second reference range determined according to the first touch size is exemplified in a description of FIG. 4.

FIG. 4 is a chart illustrating an example of a second reference range.

Referring to FIG. 4, a chart 400 indicates the second reference range. A horizontal axis of the chart 400 indicates the first touch size (or the first touch area), and a unit of the horizontal axis of the chart 400 is millimeter. A vertical axis of the chart 400 indicates the second touch size (or the second touch area), and a unit of the vertical axis of the chart 400 is millimeter.

For example, points 410 in the chart 400 indicate the first touch size determined using the first data according to at least a portion of the first points of contact caused in a pocket (e.g., the pocket 190) and the second touch size determined using the second data according to at least a portion of the second points of contact caused in the pocket. For example, a point 410-1 among the points 410 indicates that the first touch size corresponds to an area of a circle with a diameter of 15 (mm) and the second touch size corresponds to an area of a circle with a diameter of 15 (mm).

For example, a region 420 is linked to the chart 400 to indicate the first reference range (e.g., a range from a value corresponding to an area of a circle with a diameter of about 4 (mm) to a value corresponding to an area of a circle with a diameter of about 25 (mm)). For example, the points 410 included in the region 420 indicate that each of the first touch size and the second touch size is within the first reference range.

For example, a region 440 is linked to the chart 400 to indicate the first touch size within the first reference range and the second touch size within the first reference size and within the second reference range. For example, a portion of the points 410 included in the region 440 indicate the first touch size within the first reference range and the second touch size within the first reference range and within the second reference range. For example, at least a portion of the first points of contact (or the first touch contact) and at least a portion of the second points of contact (or the second touch contact), indicated by the portion of the points 410 may be recognized as a double tap input (intended by a user).

For example, a region 430 is linked to the chart 400 to indicate the first touch size within the first reference range and the second touch size within the first reference range and outside the second reference range. For example, another portion (or a remaining portion) of the points 410 included in the region 430 indicate the first touch size within the first reference range and the second touch size within the first reference range and outside the second reference range. For example, at least a portion of the first points of contact (or the first touch contact) and at least a portion of the second points of contact (or the second touch contact) indicated by the another portion of the points 410 may not be recognized as a double tap input. For example, at least a portion of the first points of contact (or the first touch contact) and at least a portion of the second points of contact (or the second touch contact) indicated by the another portion of the points 410 may be recognized as an unintended double tap input. As a non-limiting example, since each of the first touch size and the second touch size is within the first reference range, each of at least a portion of the first points of contact (or the first touch contact) and at least a portion of the second points of contact (or the second touch contact) indicated by the another portion of the points 410 may be recognized as a single tap input (intended by a user).

Referring back to FIG. 3, as a non-limiting example, the first touch size used in operation 305 may be indicated as a length of a major axis of a first oval corresponding to a region occupied by at least a portion of the first points of contact (or formed by at least a portion of the first points of contact) causing a change of capacitance greater than a threshold. For example, the first processing circuitry 211 may determine the first touch size used for the comparison executed in operation 305 as a value corresponding to the length of the major axis of the first oval.

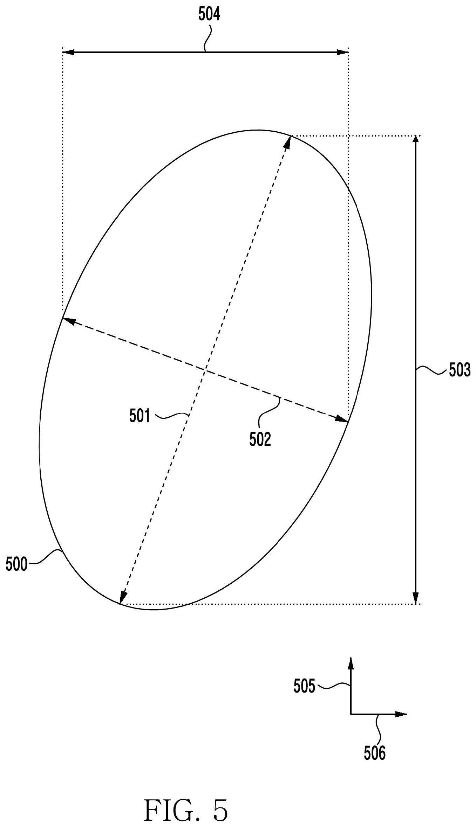

As a non-limiting example, the second touch size used for the comparison executed in operation 305 may be indicated as a length of a major axis of a second oval corresponding to a region occupied by at least a portion of the second points of contact (or formed by at least a portion of the second points of contact) causing a change of capacitance greater than the threshold. For example, the first processing circuitry 211 may determine the second touch size used for the comparison executed in operation 305 as a value corresponding to the length of the major axis of the second oval. A length available to indicate the first touch size and the second touch size is exemplified in a description of FIG. 5.

FIG. 5 illustrates an example of a length available to indicate a touch size.

Referring to FIG. 5, an oval 500 may correspond to a region occupied by at least a portion of the first points of contact (or at least a portion of the second points of contact) causing a change of capacitance greater than a threshold. For example, the oval 500 may have a major axis 501 and a minor axis 502. For example, the first processing circuitry 211 may determine a length of a line 503 among the line 503 obtained by projecting the major axis 501 to a first orthogonal basis 505 and a line 504 obtained by projecting the minor axis 502 to a second orthogonal basis 506 as the first touch size (or the second touch size). As a non-limiting example, the line 503 determined as the first touch size (or the second touch size) may be a longest one among lines obtained (or measured) (or calculated) (or checked) (or identified) until the first touch contact (or the second touch contact) is released.

Referring back to FIG. 3, as a non-limiting example, operation 305 may also be executed by the second processing circuitry 212. For example, in a case that operation 303 is executed by the first processing circuitry 211 and operation 305 is executed by the second processing circuitry 212, the first processing circuitry 211 may provide data on the first touch size and data on the second touch size to the second processing circuitry 212. For example, the second processing circuitry 212 may compare the first touch size and the second touch size, based on obtaining the data on the first touch size and the data on the second touch size from the first processing circuitry 211. For example, the second processing circuitry 212 may determine whether the second touch size is within the second reference range with respect to the first touch size by comparing the first touch size and the second touch size, based on the first touch size within the first reference range and the second touch size within the first reference range. As another example, in a case that operation 303 and operation 305 are executed by the second processing circuitry 212, the second processing circuitry 212 may determine the first touch size (or generate the first information) using the first data and determine the second touch size (or generate the second information) using the second data, based on obtaining the first data and the second data from the first processing circuitry 211. For example, the second processing circuitry 212 may compare the first touch size and the second touch size. For example, the second processing circuitry 212 may determine whether the second touch size is within the second reference range with respect to the first touch size by comparing the first touch size and the second touch size.

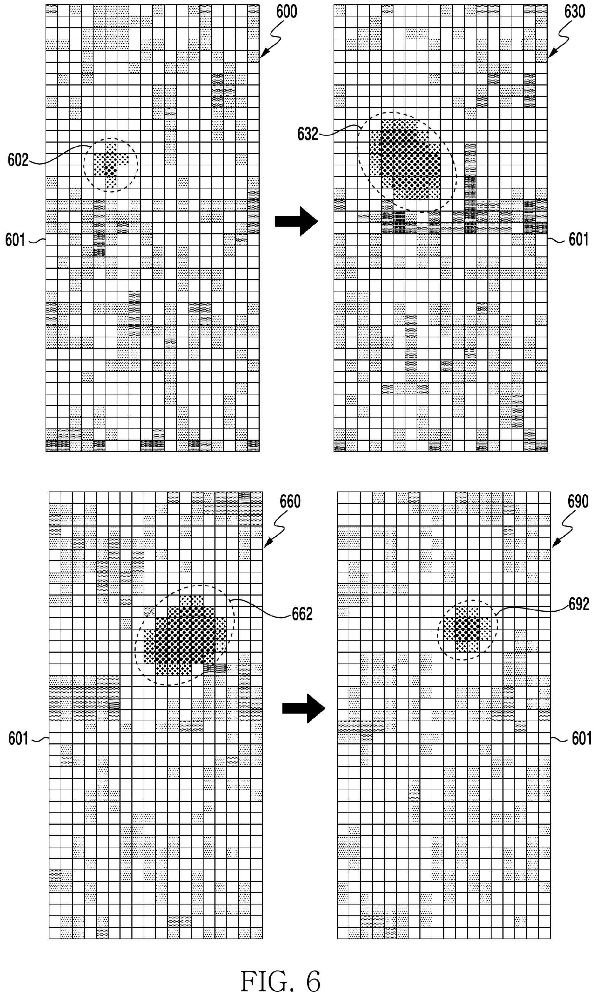

In operation 307, the first processing circuitry 211 may provide, to the second processing circuitry 212, information on the first touch contact and the second touch contact as a double tap input, according to a result of the comparison executed in operation 305. For example, the first processing circuitry 211 may provide the information to the second processing circuitry 212, based on checking the second touch size within the second reference range according to the comparison. For example, the first processing circuitry 211 may refrain from providing the information to the second processing circuitry 212, based on checking the second touch size outside the second reference range according to the comparison. For example, the information may be provided from the first processing circuitry 211 to the second processing circuitry 212 for feedback for a double tap input. For example, the first processing circuitry 211 may recognize the first touch contact and the second touch contact as an unintended double tap input, based on the second touch size outside the second reference range. An unintended double tap input is exemplified in a description of FIG. 6.

FIG. 6 illustrates an example of an unintended double tap input.

Referring to FIG. 6, the display panel 120 may include a region 601 capable of receiving a touch input through the touch sensor 222.

For example, the first points of contact according to the first touch contact may be positioned on a portion of the region 601. For example, at least a portion of the first points of contact causing a change of capacitance greater than or equal to a threshold may form a region 602 as in a state 600. For example, the second points of contact according to the second touch contact may be positioned on a portion of the region 601 after the first points of contact are released (or after the first touch contact is released). For example, at least a portion of the second points of contact causing a change of capacitance greater than or equal to the threshold may form a region 632 as in a state 630. For example, the first processing circuitry 211 may compare the first touch size indicating an area of the region 602 and the second touch size indicating a size of the region 632, and recognize the first touch contact and the second touch contact as an unintended double tap input according to a result of the comparison. For example, the first processing circuitry 211 may refrain from or skip providing information on the first touch contact and the second touch contact as a double tap input to the second processing circuitry 212. As a non-limiting example, the first processing circuitry 211 may provide information on the first touch contact as a single tap input to the second processing circuitry 212 and provide information on the second touch contact as a single tap input to the second processing circuitry 212, on a condition that each of the first touch size indicating the area of the region 602 and the second touch size indicating the area of the region 632 is within the first reference range.

For example, the first points of contact according to the first touch contact may be positioned on a portion of the region 601. For example, at least a portion of the first points of contact causing a change of capacitance greater than or equal to the threshold may form a region 662 as in a state 660. For example, the second points of contact according to the second touch contact may be positioned on a portion of the region 601 after the first points of contact are released (or after the first touch contact is released). For example, at least a portion of the second points of contact causing a change of capacitance greater than or equal to the threshold may form a region 692 as in a state 690. For example, the first processing circuitry 211 may compare the first touch size indicating an area of the region 662 and the second touch size indicating an area of the region 692, and recognize the first touch contact and the second touch contact as an unintended double tap input according to a result of the comparison. For example, the first processing circuitry 211 may refrain from or skip providing information on the first touch contact and the second touch contact as a double tap input to the second processing circuitry 212. As a non-limiting example, the first processing circuitry 211 may provide information on the first touch contact as a single tap input to the second processing circuitry 212 and provide information on the second touch contact as a single tap input to the second processing circuitry 212, on a condition that each of the first touch size indicating the area of the region 662 and the second touch size indicating the area of the region 692 is within the first reference range.

Referring back to FIG. 3, when operation 305 is executed by the second processing circuitry 212 or operation 303 and operation 305 are executed by the second processing circuitry 212, operation 307 may be replaced with another operation. For example, according to a result of the comparison, the second processing circuitry 212 may recognize the first touch contact and the second touch contact as an intended double tap input or recognize the first touch contact and the second touch contact as an unintended double tap input. For example, the second processing circuitry 212 may refrain from providing feedback for a double tap input, according to the result of the comparison. For example, the first touch contact and the second touch contact may be ignored by the second processing circuitry 212.

For example, the first processing circuitry 211 or the second processing circuitry 212 may determine or check or identify or monitor whether each of the first touch size and the second touch size is within the first reference range, before comparing the first touch size and the second touch size as in operation 305. This operation is exemplified in a description of FIG. 7.

FIG. 7 is a flowchart illustrating an exemplary method of determining whether each of a first touch size and a second touch size is within a first reference range, before comparing the first touch size and the second touch size to recognize an intended double tap input.

Referring to FIG. 7, in operation 701, the first processing circuitry 211 may determine whether the first touch size determined in operation 303 is within the first reference range. For example, operation 701 may be executed to determine whether to recognize at least a portion of the first points of contact as a single tap input. For example, the first processing circuitry 211 may execute operation 705 based on the first touch size within the first reference range, and execute operation 703 based on the first touch size outside the first reference range. As a non-limiting example, operation 701 may also be executed by the second processing circuitry 212.

In operation 703, the first processing circuitry 211 may refrain from providing information on the first touch contact as a single tap input to the second processing circuitry 212, on a condition that the first touch size is outside the first reference range. For example, since the first touch size outside the first reference range indicates that the first touch contact is unintentionally caused, the first processing circuitry 211 may refrain from providing the information as a single tap input to the second processing circuitry 212. For example, the first points of contact detected by the touch sensor 222 may be processed (recognized) as an unintended single tap input. For example, the first points of contact detected by the touch sensor 222 may be ignored by the first processing circuitry 211. For example, comparing the first touch size and the second touch size may be skipped according to operation 703.

As a non-limiting example, when operation 701 is executed by the second processing circuitry 212, operation 703 may be replaced with an operation of the second processing circuitry 212. For example, the second processing circuitry 212 may recognize the first touch contact detected by the touch sensor 222 as an unintended single tap input, based on checking that the first touch size is outside the first reference range according to operation 701. For example, the first points of contact detected by the touch sensor 222 may be ignored by the second processing circuitry 212. As a non-limiting example, the first data on the first points of contact may be discarded.

In operation 705, the first processing circuitry 211 may provide information on the first touch contact as a single tap input to the second processing circuitry 212, on a condition that the first touch size is within the first reference range. For example, since the first touch size within the first reference range indicates that the first touch contact is caused according to an intention of a user, the first processing circuitry 211 may provide the information to the second processing circuitry 212 to cause feedback for the single tap input.

As a non-limiting example, when operation 701 is executed by the second processing circuitry 212, operation 705 may be replaced with an operation of the second processing circuitry 212. For example, the second processing circuitry 212 may recognize at least a portion of the first points of contact detected by the touch sensor 222 as a single tap input (intended by a user), based on checking that the first touch size is within the first reference range according to operation 701. For example, the second processing circuitry 212 may provide feedback for the single tap input (or feedback according to the single tap input), according to the recognition.

In operation 707, the first processing circuitry 211 may determine whether the second touch size determined in operation 303 is within the first reference range. For example, operation 707 may be executed to determine whether to recognize the second touch contact as a single tap input. For example, the first processing circuitry 211 may execute operation 711 based on the second touch size within the first reference range, and execute operation 709 based on the second touch size outside the first reference range. As a non-limiting example, operation 707 may also be executed by the second processing circuitry 212.

In operation 709, the first processing circuitry 211 may refrain from providing information on the second touch contact as a single tap input to the second processing circuitry 212, on a condition that the second touch size is outside the first reference range. For example, since the second touch size outside the first reference range indicates that the second touch contact is unintentionally caused, the first processing circuitry 211 may refrain from providing the information to the second processing circuitry 212. For example, the second points of contact detected by the touch sensor 222 may be processed (or recognized) as an unintended single tap input. For example, the second points of contact detected by the touch sensor 222 may be ignored by the first processing circuitry 211. For example, comparing the first touch size and the second touch size may be skipped according to operation 709.

As a non-limiting example, when operation 707 is executed by the second processing circuitry 212, operation 709 may be replaced with an operation of the second processing circuitry 212. For example, the second processing circuitry 212 may recognize the second points of contact detected by the touch sensor 222 as an unintended single tap input, based on checking that the second touch size is outside the first reference range according to operation 707. For example, the second points of contact detected by the touch sensor 222 may be ignored by the second processing circuitry 212. As a non-limiting example, the second data on the second points of contact may be discarded.

In operation 711, the first processing circuitry 211 may provide information on the second touch contact as a single tap input to the second processing circuitry 212, on a condition that the second touch size is within the first reference range. For example, since the second touch size within the first reference range indicates that the second touch contact is caused according to an intention of a user, the first processing circuitry 211 may provide the information to the second processing circuitry 212 to cause feedback for the single tap input.

As a non-limiting example, when operation 707 is executed by the second processing circuitry 212, operation 711 may be replaced with an operation of the second processing circuitry 212. For example, the second processing circuitry 212 may recognize at least a portion of the second points of contact detected by the touch sensor 222 as a single tap input (intended by a user), based on checking that the second touch size is within the first reference range according to operation 707. For example, the second processing circuitry 212 may provide feedback for the single tap input (or feedback according to the single tap input) according to the recognition.

In operation 712, the first processing circuitry 211 may determine whether the second touch size is within the second reference range with respect to the first touch size, by comparing the first touch size and the second touch size. For example, operation 712 may correspond to operation 305 of FIG. 3. For example, determining whether the second touch size is within the second reference range may be executed to determine whether to recognize the first touch contact and the second touch contact as a double tap input. For example, the first processing circuitry 211 may execute operation 715 based on the second touch size within the second reference range, and execute operation 713 based on the second touch size outside the second reference range. As a non-limiting example, operation 712 may also be executed by the second processing circuitry 212.

In operation 713, the first processing circuitry 211 may refrain from providing information on the first touch contact and the second touch contact as a double tap input to the second processing circuitry 212, on a condition that the second touch size is outside the second reference range. For example, the second touch size outside the second reference range may indicate that a difference between the first touch size and the second touch size is greater than a threshold. Since the difference between the first touch size and the second touch size being greater than the threshold indicates that the first touch contact and the second touch contact following the first touch contact are unintended, the first processing circuitry 211 may refrain from providing the information to the second processing circuitry 212. As a non-limiting example, the first touch contact may be recognized as a single tap input and the second touch contact may be recognized as a single tap input, but the first touch contact and the second touch contact may not be recognized as a double tap input.

As a non-limiting example, when operation 712 is executed by the second processing circuitry 212, operation 713 may be replaced with an operation of the second processing circuitry 212. For example, the second processing circuitry 212 may recognize the first touch contact and the second touch contact as an unintended double tap input, based on checking that the second touch size is outside the second reference range according to operation 712. For example, the second processing circuitry 212 may refrain from causing feedback for a double tap input according to the first touch contact and the second touch contact.

In operation 715, the first processing circuitry 211 may provide information on the first touch contact and the second touch contact as a double tap input to the second processing circuitry 212, on a condition that the second touch contact is within the second reference range. For example, since the second touch contact within the second reference range indicates that the first touch contact and the second touch contact are caused according to an intention of a user, the first processing circuitry 211 may provide the information to the second processing circuitry 212 to cause feedback for the double tap input.

As a non-limiting example, when operation 712 is executed by the second processing circuitry 212, operation 715 may be replaced with an operation of the second processing circuitry 212. For example, the second processing circuitry 212 may recognize at least a portion of the first points of contact and at least a portion of the second points of contact detected by the touch sensor 222 as a double tap input (intended by a user), based on checking that the second touch size is within the second reference range according to operation 712. For example, the second processing circuitry 212 may provide feedback for the double tap input (or feedback according to the double tap input) according to the recognition.

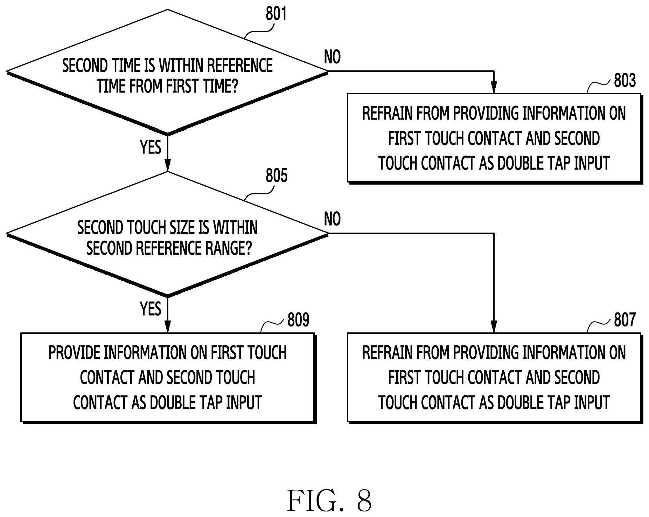

For example, the first processing circuitry 211 or the second processing circuitry 212 may check or monitor or identify or obtain a difference between first time at which the first data is obtained (or first time at which the first touch contact is caused) and second time at which the second data is obtained (or second time at which the second touch contact is caused) to determine whether to recognize the first touch contact and the second touch contact as a double tap input, before comparing the first touch size and the second touch size as in operation 305. This operation is exemplified in a description of FIG. 8.

FIG. 8 is a flowchart illustrating an exemplary method of comparing first time and second time, before comparing a first touch size and a second touch size to recognize an intended double tap input.

Referring to FIG. 8, in operation 801, the first processing circuitry 211 may determine whether second time at which the second touch size within the first reference range is checked (or second time at which the second touch contact is checked) is within reference time from first time at which the first touch size within the first reference range is checked (or first time at which the first touch contact is checked). For example, the first time may also be time at which the first touch contact is recognized as a single tap input in the first processing circuitry 211 or the second processing circuitry 212. For example, the second time may also be time at which the second touch contact is recognized as a single tap input in the first processing circuitry 211 or the second processing circuitry 212. For example, the first time may also be time at which information on the first touch contact is provided as a single tap input to the second processing circuitry 212. For example, the second time may also be time at which information on the second touch contact is provided as a single tap input to the second processing circuitry 212. For example, the first time may also be time at which the first points of contact are released (or the first touch contact is released). For example, the second time may also be time at which the second points of contact are released (or the second touch contact is released).

For example, the first processing circuitry 211 may execute operation 805 based on the second time within the reference time from the first time, and execute operation 803 based on the second time outside the reference time from the first time. As a non-limiting example, operation 801 may also be executed by the second processing circuitry 212.

In operation 803, the first processing circuitry 211 may refrain from providing information on the first touch contact and the second touch contact as a double tap input to the second processing circuitry 212, on a condition that the second time is outside the reference time from the first time. For example, since the second time outside the reference time from the first time indicates that the first points of contact and the second points of contact are detected discontinuously through the touch sensor 222, the first processing circuitry 211 may refrain from providing the information to the second processing circuitry 212. For example, the first touch contact and the second touch contact may be processed (or recognized) as an unintended double tap input. For example, comparing the first touch size and the second touch size may be skipped according to operation 803.

As a non-limiting example, when operation 801 is executed by the second processing circuitry 212, operation 803 may be replaced with an operation of the second processing circuitry 212. For example, the second processing circuitry 212 may recognize the first touch contact and the second touch contact as an unintended double tap input, based on checking that the second time is outside the reference time from the first time, according to operation 801. For example, the first touch contact and the second touch contact may be ignored by the second processing circuitry 212.

In operation 805, the first processing circuitry 211 may determine whether the second touch size is within the second reference range with respect to the first touch size by comparing the first touch size and the second touch size, on a condition that the second time is within the reference time from the first time. For example, since the second time within the reference time from the first time indicates that the first points of contact and the second points of contact are detected continuously through the touch sensor 222, the first processing circuitry 211 may compare the first touch size and the second touch size. For example, operation 805 may correspond to operation 712 of FIG. 7. For example, the first processing circuitry 211 may execute operation 809 based on checking the second touch size within the second reference range, and execute operation 807 based on checking the second touch size outside the second reference range. As a non-limiting example, operation 805 may also be executed by the second processing circuitry 212.

In operation 807, the first processing circuitry 211 may refrain from providing information on the first touch contact and the second touch contact as a double tap input to the second processing circuitry 212, in a case of checking the second touch size outside the second reference range. For example, operation 807 may correspond to operation 713 of FIG. 7.

In operation 809, the first processing circuitry 211 may provide information on the first touch contact and the second touch contact as a double tap input to the second processing circuitry 212, in a case of checking the second touch size within the second reference range. For example, operation 809 may correspond to operation 715 of FIG. 7.

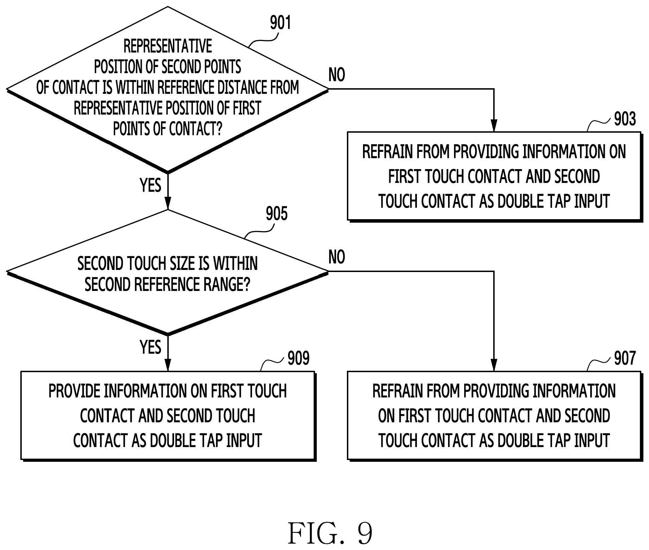

For example, the first processing circuitry 211 or the second processing circuitry 212 may check or monitor or identify or obtain a difference between a representative position of the first points of contact (or a representative position of at least a portion of the first points of contact used to determine the first touch size) and a representative position of the second points of contact (or a representative position of at least a portion of the second points of contact used to determine the second touch size), to determine whether to recognize the first touch contact and the second touch contact as a double tap input, before comparing the first touch size and the second touch size as in operation 305. The operation is exemplified in a description of FIG. 9.

FIG. 9 is a flowchart illustrating an exemplary method of comparing a representative position of first points of contact and a representative position of second points of contact, before comparing a first touch size and a second touch size to recognize an intended double tap input.

Referring to FIG. 9, in operation 901, the first processing circuitry 211 may determine whether a representative position of the second points of contact is within a reference distance from a representative position of the first points of contact. For example, the representative position of the first points of contact may also be a representative position of at least a portion of the first points of contact used to determine the first touch size. For example, the representative position of the second points of contact may also be a representative position of at least a portion of the second points of contact used to determine the second touch size. As a non-limiting example, the representative position of the first points of contact may be determined or set or identified or obtained as a position of a point of contact causing a largest change of capacitance among the first points of contact. As a non-limiting example, the representative position of the second points of contact may be determined or set or identified or obtained as a position of a point of contact causing a largest change of capacitance among the second points of contact. As a non-limiting example, the representative position of the first points of contact may be determined or set or identified or obtained as a center position of a region occupied by at least a portion of the first points of contact causing a change of capacitance greater than a threshold. As a non-limiting example, the representative position of the second points of contact may be determined or set or identified or obtained as a center position of a region occupied by at least a portion of the second points of contact causing a change of capacitance greater than a threshold.

For example, the first processing circuitry 211 may execute operation 905 based on the representative position of the second points of contact within the reference distance from the representative position of the first points of contact, and execute operation 903 based on the representative position of the second points of contact outside the reference distance from the representative position of the first points of contact. As a non-limiting example, operation 901 may also be executed by the second processing circuitry 212.

As a non-limiting example, operation 901 may also be executed on a condition that the second time is within the reference time from the first time according to operation 801 of FIG. 8.

In operation 903, the first processing circuitry 211 may refrain from providing information on the first touch contact and the second touch contact as a double tap input to the second processing circuitry 212, on a condition that the representative position of the second points of contact is outside the reference distance from the representative position of the first points of contact. For example, since the representative position of the second points of contact being outside the reference distance from the representative position of the first points of contact indicates that the second points of contact are not related to the first points of contact (or the second points of contact are independent from the first points of contact), the first processing circuitry 211 may refrain from providing the information to the second processing circuitry 212. For example, the first touch contact and the second touch contact may be processed (or recognized) as an unintended double tap input. For example, comparing the first touch size and the second touch size may be skipped according to operation 903.

As a non-limiting example, when operation 901 is executed by the second processing circuitry 212, operation 903 may be replaced with an operation of the second processing circuitry 212. For example, the second processing circuitry 212 may recognize the first touch contact and the second touch contact as an unintended double tap input, based on checking that the representative position of the second points of contact is outside the reference distance from the representative position of the first points of contact, according to operation 901. For example, the first touch contact and the second touch contact may be ignored by the second processing circuitry 212.

In operation 905, the first processing circuitry 211 may determine whether the second touch size is within the second reference range with respect to the first touch size by comparing the first touch size and the second touch size, on a condition that the representative position of the second points of contact is within the reference distance from the representative position of the first points of contact. For example, since the representative position of the second points of contact within the reference distance from the representative position of the first points of contact indicates that the second touch contact is related to the first touch contact, the first processing circuitry 211 may compare the first touch size and the second touch size. For example, operation 905 may correspond to operation 712 of FIG. 7. For example, the first processing circuitry 211 may execute operation 909 based on checking the second touch size within the second reference range, and execute operation 907 based on checking the second touch size outside the second reference range. As a non-limiting example, operation 905 may also be executed by the second processing circuitry 212.

In operation 907, the first processing circuitry 211 may refrain from providing information on the first touch contact and the second touch contact as a double tap input to the second processing circuitry 212, in a case of checking the second touch size outside the second reference range. For example, operation 907 may correspond to operation 713 of FIG. 7.

In operation 909, the first processing circuitry 211 may provide information on the first touch contact and the second touch contact as a double tap input to the second processing circuitry 212, in a case of checking the second touch size within the second reference range. For example, operation 909 may correspond to operation 715 of FIG. 7.

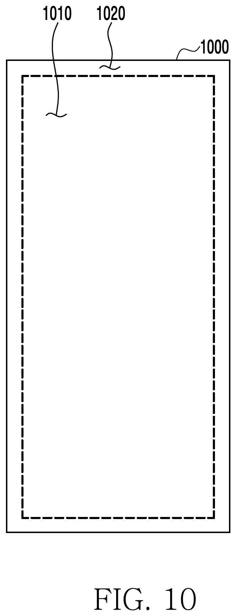

For example, the second reference range may be changed according to at least one other parameter distinguished from the first touch size. For example, the at least one other parameter may include a first position (or a first representative position) of a region formed by at least a portion of the first points of contact used to determine the first touch size and/or a second position (or a second representative position) of a region formed by at least a portion of the second points of contact used to determine the second touch size. For example, the second reference range may be changed further based on the at least one other parameter. The second reference range determined according to the at least one other parameter is exemplified in a description of FIG. 10.

FIG. 10 illustrates an example of a central region and a peripheral region set to determine a second reference range.

Referring to FIG. 10, a region 1000 (e.g., the region 130 and/or the region 601) in the display panel 120 capable of receiving a touch input through the touch sensor 222 may include a central region 1010 and a peripheral region 1020 surrounding the central region 1010. For example, the peripheral region 1020 may be positioned along a periphery of the region 1000. For example, the central region 1010 and the peripheral region 1020 may be defined or set to change the second reference range according to the first position and/or the second position.

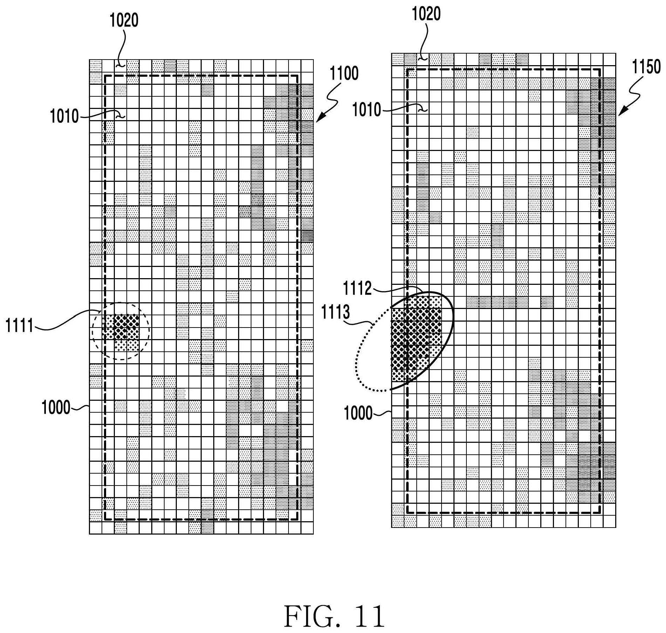

As a non-limiting example, the second reference range when a first region defined (or formed) (or occupied) by the first points of contact (or at least a portion of the first points of contact used to determine the first touch size) is within the central region 1010 and a second region defined by the second points of contact (or at least a portion of the second points of contact used to determine the second touch size) is within the central region 1010 may be at least partially different from the second reference range when at least a portion of the first region is within the peripheral region 1020 and the second region is within the central region 1010. As a non-limiting example, the second reference range when the first region is within the central region 1010 and the second region is within the central region 1010 may be at least partially different from the second reference range when the first region is within the central region 1010 and at least a portion of the second region is within the peripheral region 1020. As a non-limiting example, the second reference range when the first region is within the central region 1010 and the second region is within the central region 1010 may be at least partially different from the second reference range when at least a portion of the first region is within the peripheral region 1020 and at least a portion of the second region is within the peripheral region 1020. Determining the second reference range when the first region is within the central region 1010 and at least a portion of the second region is within the peripheral region 1020 is exemplified in a description of FIG. 11.

FIG. 11 illustrates an example of second points of contact on at least a portion of a peripheral region.

Referring to FIG. 11, a first region 1111 formed by at least a portion of the first points of contact used to determine the first touch size may be positioned within the central region 1010 as in a state 1100. The second points of contact may be detected through the touch sensor 222 after the first points of contact are released. For example, at least a portion of a second region 1112 formed by at least a portion of the second points of contact used to determine the second touch size may be positioned within the peripheral region 1020 as in a state 1150.

As a non-limiting example, assume that an area of a first region 1111 (or the first touch size) corresponds to an area of a circle with a diameter of about 15 (mm) within the central range of the first reference range, and an area of a second region 1112 (or the second touch size) corresponds to an area of a circle with a diameter of about 25 (mm) within the second peripheral range of the first reference range. For example, the first processing circuitry 211 (or the second processing circuitry 212) may determine the second reference range as a range between a value corresponding to an area of a circle with a diameter of about 4 (mm) and a value corresponding to an area of a circle with a diameter of about 25 (mm) when the second region 1112 is within the central region 1010. For example, since the area of the second region 1112 corresponds to an area of a circle with a diameter of about 25 (mm), the first processing circuitry 211 (or the second processing circuitry 212) may determine that the area of the second region 1112 is within the second reference range. As another example, the first processing circuitry 211 (or the second processing circuitry 212) may determine the second reference range as a range between a value corresponding to an area of a circle with a diameter of about 4 (mm) and a value corresponding to an area of a circle with a diameter of about 20 (mm) when at least a portion of the second region 1112 is within the peripheral region 1020 as in the state 1150 of FIG. 11. For example, since the second region 1112 positioned at least partially within the peripheral region 1020 may indicate that a portion of an external object causing the second points of contact is positioned on a third region 1113 outside the region 1000, the first processing circuitry 211 (or the second processing circuitry 212) may determine the second reference range when at least a portion of the second region 1112 is within the peripheral region 1020 to be narrower than the second reference range when the second region 1112 is within the central region 1010. For example, since the area of the second region 1112 corresponds to an area of a circle with a diameter of about 25 (mm), the first processing circuitry 211 (or the second processing circuitry 212) may determine that the area of the second region 1112 is outside the second reference range.

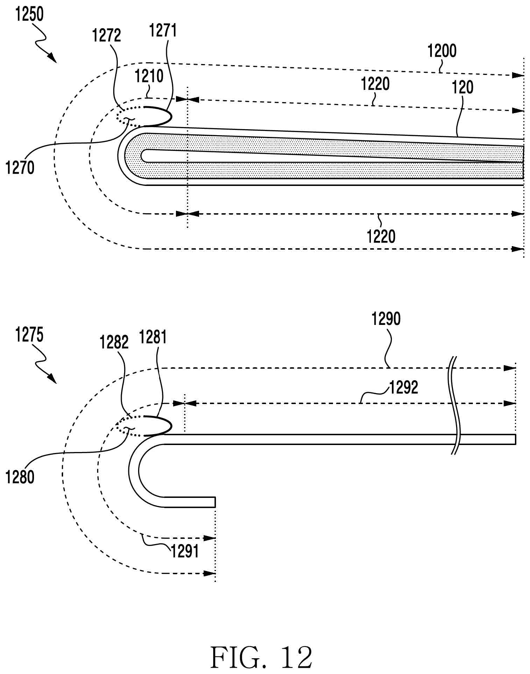

For example, the electronic device 100 may be a foldable electronic device. As a non-limiting example, the electronic device 100 may include a display panel 120 visible from the outside, in a folded state. For example, the display panel 120 may include a bending portion configured to be bent in the folded state. For example, the bending portion may include a portion of a region capable of receiving a touch input through the touch sensor 222. For example, the portion of the region included in the bending portion may be visually exposed toward the outside (or may be visible from the outside) in the folded state. For example, the portion of the region may correspond to a central region of the region. For example, the central region may be at least partially surrounded by a peripheral region of the region. For example, the central region and the peripheral region are exemplified in a description of FIG. 12.

FIG. 12 illustrates an example of a central region and a peripheral region of a foldable electronic device and a slidable electronic device set to determine a second reference range.

Referring to FIG. 12, a display panel 120 in an electronic device 100, which is a foldable electronic device, may include a bending portion configured to be flexibly bent according to a change from an unfolded state to a folded state (e.g., a state 1250). For example, the display panel 120 may include a region 1200 capable of receiving a touch input through a touch sensor 222. For example, the region 1200 may include a central region 1210 corresponding to the bending portion and a peripheral region 1220 partially surrounding the central region 1210. For example, the central region 1210 and the peripheral region 1220 may be defined or set to change the second reference range.

As a non-limiting example, as in the state 1250, the central region 1210 may be visually exposed toward the outside in the folded state of the electronic device 100. For example, as in the state 1250, since a portion 1271 of an external object 1270 is positioned within the central region 1210 and another portion 1272 (or a remaining portion 1272) of the external object 1270 may be positioned outside the region 1200, the second reference range when a first region defined (or formed) (or occupied) by the first points of contact (or at least a portion of the first points of contact used to determine the first touch size) is within the peripheral region 1220 and a second region defined by the second points of contact (or at least a portion of the second points of contact used to determine the second touch size) is within the peripheral region 1220 may be at least partially different from the second reference range when at least a portion of the first region is within the central region 1210 and the second region is within the central region 1210. As a non-limiting example, the second reference range when the first region is within the peripheral region 1220 and the second region is within the peripheral region 1220 may be at least partially different from the second reference range when the first region is within the peripheral region 1220 and at least a portion of the second region is within the central region 1210. As a non-limiting example, the second reference range when the first region is within the peripheral region 1220 and the second region is within the peripheral region 1220 may be at least partially different from the second reference range when at least a portion of the first region is within the central region 1210 and at least a portion of the second region is within the peripheral region 1220.

At least a portion of a display panel 120 in an electronic device 100, which is a slidable electronic device, may be rolled into a first housing of the electronic device 100 according to a second housing of the electronic device 100 moved (or slid) with respect to the first housing of the electronic device 100. For example, the display panel 120 may include a bending portion configured to be flexibly bent by being rolled into the first housing of the electronic device 100. For example, the display panel 120 may include a region 1290 capable of receiving a touch input through the touch sensor 222. For example, the region 1290 may include a region 1291 corresponding to the bending portion and a region 1292 next to the region 1291. For example, the region 1291 and the region 1292 may be defined or set to change the second reference range.

As a non-limiting example, as in a state 1275, a portion of the region 1291 may be visually exposed toward the outside in a state in which the portion of the display panel 120 is rolled into the first housing of the electronic device 100. For example, as in the state 1275, since a portion 1281 of an external object 1280 is positioned within the region 1291 and another portion 1282 (or a remaining portion 1282) of the external object 1280 may be positioned outside the region 1290, the second reference range when a first region defined (or formed) (or occupied) by the first points of contact (or at least a portion of the first points of contact used to determine the first touch size) is within the region 1292 and a second region defined by the second points of contact (or at least a portion of the second points of contact used to determine the second touch size) is within the region 1292 may be at least partially different from the second reference range when at least a portion of the first region is within the region 1291 and the second region is within the region 1291. As a non-limiting example, the second reference range when the first region is within the region 1292 and the second region is within the region 1292 may be at least partially different from the second reference range when the first region is within the region 1292 and at least a portion of the second region is within the region 1291. As a non-limiting example, the second reference range when the first region is within the region 1292 and the second region is within the region 1292 may be at least partially different from the second reference range when at least a portion of the first region is within the region 1291 and at least a portion of the second region is within the region 1292.

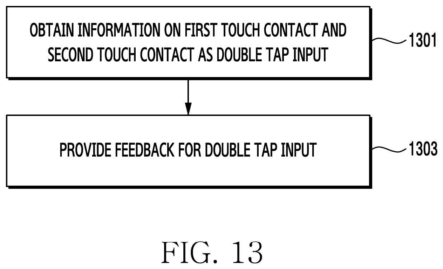

For example, when the first processing circuitry 211 executes at least a portion of operations exemplified in the description of FIG. 3 to FIG. 12, the second processing circuitry 212 may be configured to provide feedback for a touch input, based on (or in response to) information obtained from the first processing circuitry 211. For example, the second processing circuitry 212 may provide, based on obtaining information on the first touch contact and the second touch contact as a double tap input from the first processing circuitry 211, feedback according to the double tap input. This operation is exemplified in a description of FIG. 13.

FIG. 13 is a flowchart illustrating an exemplary method of providing feedback for a double tap input.

Referring to FIG. 13, in operation 1301, the second processing circuitry 212 may obtain information on the first touch contact and the second touch contact as a double tap input from the first processing circuitry 211. For example, operation 1301 may be a counter operation of operation 307 of FIG. 3, operation 715 of FIG. 7, operation 809 of FIG. 8, or operation 909 of FIG. 9, executed by the first processing circuitry 211.

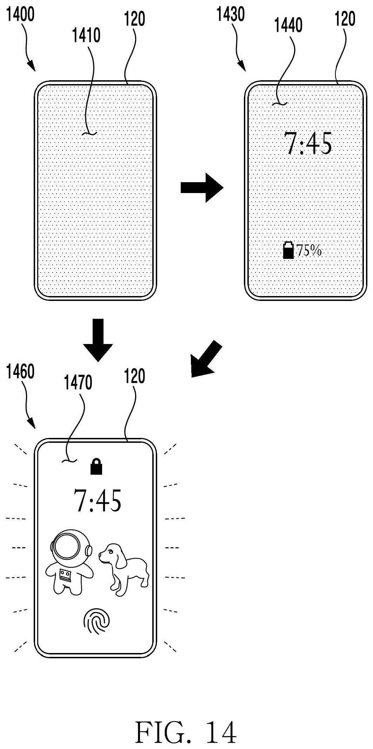

In operation 1303, the second processing circuitry 212 may provide feedback for the double tap input based on the information. For example, the second processing circuitry 212 may provide the feedback by changing a screen displayed on the display panel 120 or starting displaying a screen on the display panel 120. As a non-limiting example, the second processing circuitry 212 may change a screen displayed on the display panel 120, based on obtaining the information from the first processing circuitry 211 while the display panel 120 operates in the low power state. As a non-limiting example, the second processing circuitry 212 may start displaying a screen on the display panel 120, based on obtaining the information from the first processing circuitry 211 while the display panel 120 is in the power-off state. These operations are exemplified in description of FIG. 14.

FIG. 14 illustrates an example of feedback for a double tap input.

Referring to FIG. 14, the display panel 120 may be in the power-off state, as in a state 1400. For example, the display panel 120 may provide a black screen 1410 in the state 1400. For example, the second processing circuitry 212 may change the state 1400 to a state 1460, based on obtaining information on the first touch contact and the second touch contact as a double tap input from the first processing circuitry 211 or checking that the second touch size is within the second reference range.

For example, in the state 1460, the second processing circuitry 212 may display a lock screen 1470 on the display panel 120. For example, the second processing circuitry 212 may provide feedback for the double tap input by displaying the lock screen 1470.

For example, the display panel 120 may operate in the low power state (or a state for lower power consumption), as in a state 1430. For example, the display panel 120 may display a screen 1440 in the state 1430. As a non-limiting example, the second processing circuitry 212 may be in a sleep state or a state for lower power consumption, in at least a portion of a time interval during which the screen 1440 is displayed. As a non-limiting example, the screen 1440 may be displayed for an always on display (AoD) function. For example, power consumed to display the screen 1440 on the display panel 120 may be less than power consumed to display the lock screen 1470 on the display panel 120. For example, since the lock screen 1470 is displayed on the display panel 120 in a normal power state, power consumed to display the lock screen 1470 on the display panel 120 may be greater than power consumed to display the screen 1440 on the display panel 120. For example, brightness of the screen 1440 may be darker than brightness of the lock screen 1470. For example, the second processing circuitry 212 may change the state 1430 to the state 1460, based on obtaining information on the first touch contact and the second touch contact as a double tap input from the first processing circuitry 211 or checking that the second touch size is within the second reference range.

For example, in the state 1460, the second processing circuitry 212 may display the lock screen 1470 on the display panel 120. For example, the second processing circuitry 212 may provide feedback for the double tap input by displaying the lock screen 1470.

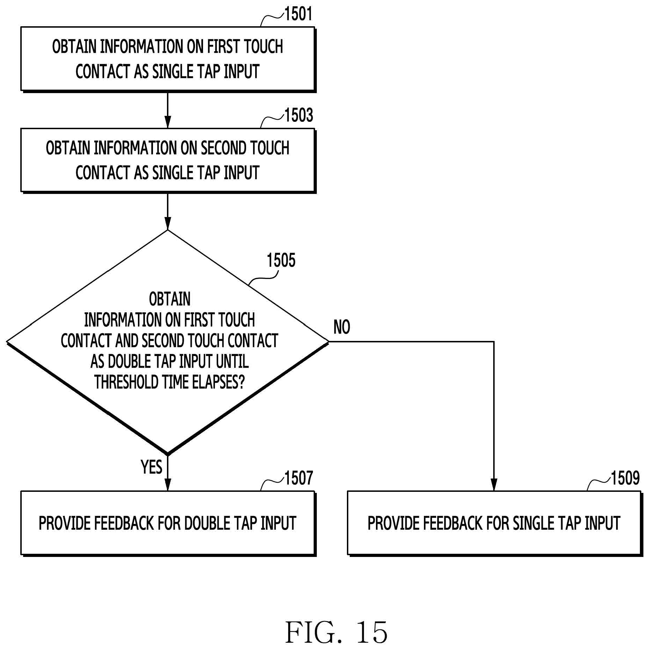

For example, as exemplified in the description of FIG. 7, the first processing circuitry 211 may provide information on the first touch contact as a single tap input to the second processing circuitry 212 in response to the first touch size within the first reference range, provide information on the second touch contact as a single tap input to the second processing circuitry 212 in response to the second touch size within the first reference range, and provide information on the first touch contact and the second touch contact as a double tap input to the second processing circuitry 212 in response to the first touch size within the first reference range and the second touch size within the first reference range and the second reference range. For example, since time at which the information on the first touch contact and the second touch contact is provided to the second processing circuitry 212 as the double tap input is after time at which each of the information on the first touch contact and the information on the second touch contact are provided to the second processing circuitry 212 as a single tap input, the second processing circuitry 212 may use threshold time defined in association with obtaining the information on the first touch contact and the second touch contact as a double tap input from the first processing circuitry 211. Use of the threshold time is exemplified in a description of FIG. 15.

FIG. 15 is a flowchart illustrating an exemplary method of checking whether a threshold time elapses to provide feedback for a double tap input.

Referring to FIG. 15, in operation 1501, the second processing circuitry 212 may obtain (or receive) information on the first touch contact as a single tap input from the first processing circuitry 211, while the display panel 120 is in the low power state or the power-off state. For example, operation 1501 may be a counter operation of operation 705 of FIG. 7 executed by the first processing circuitry 211.

In operation 1503, the second processing circuitry 212 may obtain (or receive) information on the second touch contact as a single tap input from the first processing circuitry 211, while the display panel 120 is in the low power state or the power-off state. For example, operation 1503 may be a counter operation of operation 711 of FIG. 7 executed by the first processing circuitry 211.

In operation 1505, the second processing circuitry 212 may check or monitor whether to obtain information on the first touch contact and the second touch contact as a double tap input from the first processing circuitry 211 until threshold time elapses, based on the information on the first touch contact and the information on the second touch contact. For example, since providing feedback for a single tap input according to the information on the first touch contact and/or the information on the second touch contact and then providing feedback for a double tap input according to the information on the first touch contact and the second touch contact may be perceived as an unsuitable operation of the electronic device 100, the second processing circuitry 212 may execute operation 1505 before providing feedback for a single tap input according to the information on the first touch contact and/or the information on the second touch contact. For example, the second processing circuitry 212 may defer the feedback for the single tap input until the threshold time elapses.

For example, the second processing circuitry 212 may execute operation 1507 based on the information on the first touch contact and the second touch contact obtained from the first processing circuitry 211 before the threshold time elapses, and execute operation 1509 based on the information on the first touch contact and the second touch contact not obtained from the first processing circuitry 211 until the threshold time elapses.

In operation 1507, the second processing circuitry 212 may provide feedback for a double tap input, on a condition that the information on the first touch contact and the second touch contact is obtained from the first processing circuitry 211 before the threshold time elapses. For example, referring to FIG. 14, the second processing circuitry 212 may cause a change from the state 1400 to the state 1460 or cause a change from the state 1430 to the state 1460.

In operation 1509, the second processing circuitry 212 may provide feedback for a single tap input, on a condition that the information on the first touch contact and the second touch contact is not obtained from the first processing circuitry 211 until the threshold time elapses. For example, since not obtaining the information on the first touch contact and the second touch contact until the threshold time elapses may indicate that the first touch size is within the first reference range and the second touch size is within the first reference range and outside the second reference range, the second processing circuitry 212 may provide the feedback for the single tap input. For example, the feedback for the single tap input may be provided according to the information on the first touch contact and/or the information on the second touch contact. For example, referring to FIG. 14, the second processing circuitry 212 may cause a change from the state 1400 to the state 1430. For example, the second processing circuitry 212 may provide the feedback for the single tap input by changing a state of the display panel 120 from the power-off state to the low power state and displaying the screen 1440 on the display panel 120 operating in the low power state.

Operations of the electronic device 100 as described above may be executed by an electronic device 1601 exemplified in descriptions of FIG. 16 and FIG. 17.

FIG. 16 is a block diagram illustrating an electronic device 1601 in a network environment 1600 according to various embodiments. Referring to FIG. 16, the electronic device 1601 in the network environment 1600 may communicate with an electronic device 1602 via a first network 1698 (e.g., a short-range wireless communication network), or at least one of an electronic device 1604 or a server 1608 via a second network 1699 (e.g., a long-range wireless communication network). According to an embodiment, the electronic device 1601 may communicate with the electronic device 1604 via the server 1608. According to an embodiment, the electronic device 1601 may include a processor 1620, memory 1630, an input module 1650, a sound output module 1655, a display module 1660, an audio module 1670, a sensor module 1676, an interface 1677, a connecting terminal 1678, a haptic module 1679, a camera module 1680, a power management module 1688, a battery 1689, a communication module 1690, a subscriber identification module (SIM) 1696, or an antenna module 1697. In some embodiments, at least one of the components (e.g., the connecting terminal 1678) may be omitted from the electronic device 1601, or one or more other components may be added in the electronic device 1601. In some embodiments, some of the components (e.g., the sensor module 1676, the camera module 1680, or the antenna module 1697) may be implemented as a single component (e.g., the display module 1660).

The processor 1620 may execute, for example, software (e.g., a program 1640) to control at least one other component (e.g., a hardware or software component) of the electronic device 1601 coupled with the processor 1620, and may perform various data processing or computation. According to an embodiment, as at least part of the data processing or computation, the processor 1620 may store a command or data received from another component (e.g., the sensor module 1676 or the communication module 1690) in volatile memory 1632, process the command or the data stored in the volatile memory 1632, and store resulting data in non-volatile memory 1634. According to an embodiment, the processor 1620 may include a main processor 1621 (e.g., a central processing unit (CPU) or an application processor (AP)), or an auxiliary processor 1623 (e.g., a graphics processing unit (GPU), a neural processing unit (NPU), an image signal processor (ISP), a sensor hub processor, or a communication processor (CP)) that is operable independently from, or in conjunction with, the main processor 1621. For example, when the electronic device 1601 includes the main processor 1621 and the auxiliary processor 1623, the auxiliary processor 1623 may be adapted to consume less power than the main processor 1621, or to be specific to a specified function. The auxiliary processor 1623 may be implemented as separate from, or as part of the main processor 1621.

The auxiliary processor 1623 may control at least some of functions or states related to at least one component (e.g., the display module 1660, the sensor module 1676, or the communication module 1690) among the components of the electronic device 1601, instead of the main processor 1621 while the main processor 1621 is in an inactive (e.g., sleep) state, or together with the main processor 1621 while the main processor 1621 is in an active state (e.g., executing an application). According to an embodiment, the auxiliary processor 1623 (e.g., an image signal processor or a communication processor) may be implemented as part of another component (e.g., the camera module 1680 or the communication module 1690) functionally related to the auxiliary processor 1623. According to an embodiment, the auxiliary processor 1623 (e.g., the neural processing unit) may include a hardware structure specified for artificial intelligence model processing. An artificial intelligence model may be generated by machine learning. Such learning may be performed, e.g., by the electronic device 1601 where the artificial intelligence is performed or via a separate server (e.g., the server 1608). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1630 may store various data used by at least one component (e.g., the processor 1620 or the sensor module 1676) of the electronic device 1601. The various data may include, for example, software (e.g., the program 1640) and input data or output data for a command related thereto. The memory 1630 may include the volatile memory 1632 or the non-volatile memory 1634.

The program 1640 may be stored in the memory 1630 as software, and may include, for example, an operating system (OS) 1642, middleware 1644, or an application 1646.

The input module 1650 may receive a command or data to be used by another component (e.g., the processor 1620) of the electronic device 1601, from the outside (e.g., a user) of the electronic device 1601. The input module 1650 may include, for example, a microphone, a mouse, a keyboard, a key (e.g., a button), or a digital pen (e.g., a stylus pen).

The sound output module 1655 may output sound signals to the outside of the electronic device 1601. The sound output module 1655 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1660 may visually provide information to the outside (e.g., a user) of the electronic device 1601. The display module 1660 may include, for example, a display, a hologram device, or a projector and control circuitry to control a corresponding one of the display, hologram device, and projector. According to an embodiment, the display module 1660 may include a touch sensor adapted to detect a touch, or a pressure sensor adapted to measure the intensity of force incurred by the touch.

The audio module 1670 may convert a sound into an electrical signal and vice versa. According to an embodiment, the audio module 1670 may obtain the sound via the input module 1650, or output the sound via the sound output module 1655 or a headphone of an external electronic device (e.g., an electronic device 1602) directly (e.g., wiredly) or wirelessly coupled with the electronic device 1601.

The sensor module 1676 may detect an operational state (e.g., power or temperature) of the electronic device 1601 or an environmental state (e.g., a state of a user) external to the electronic device 1601, and then generate an electrical signal or data value corresponding to the detected state. According to an embodiment, the sensor module 1676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1677 may support one or more specified protocols to be used for the electronic device 1601 to be coupled with the external electronic device (e.g., the electronic device 1602) directly (e.g., wiredly) or wirelessly. According to an embodiment, the interface 1677 may include, for example, a high definition multimedia interface (HDMI), a universal serial bus (USB) interface, a secure digital (SD) card interface, or an audio interface.

A connecting terminal 1678 may include a connector via which the electronic device 1601 may be physically connected with the external electronic device (e.g., the electronic device 1602). According to an embodiment, the connecting terminal 1678 may include, for example, an HDMI connector, a USB connector, an SD card connector, or an audio connector (e.g., a headphone connector).

The haptic module 1679 may convert an electrical signal into a mechanical stimulus (e.g., a vibration or a movement) or electrical stimulus which may be recognized by a user via his tactile sensation or kinesthetic sensation. According to an embodiment, the haptic module 1679 may include, for example, a motor, a piezoelectric element, or an electric stimulator.

The camera module 1680 may capture a still image or moving images. According to an embodiment, the camera module 1680 may include one or more lenses, image sensors, image signal processors, or flashes.

The power management module 1688 may manage power supplied to the electronic device 1601. According to an embodiment, the power management module 1688 may be implemented as at least part of, for example, a power management integrated circuit (PMIC).

The battery 1689 may supply power to at least one component of the electronic device 1601. According to an embodiment, the battery 1689 may include, for example, a primary cell which is not rechargeable, a secondary cell which is rechargeable, or a fuel cell.

The communication module 1690 may support establishing a direct (e.g., wired) communication channel or a wireless communication channel between the electronic device 1601 and the external electronic device (e.g., the electronic device 1602, the electronic device 1604, or the server 1608) and performing communication via the established communication channel. The communication module 1690 may include one or more communication processors that are operable independently from the processor 1620 (e.g., the application processor (AP)) and supports a direct (e.g., wired) communication or a wireless communication. According to an embodiment, the communication module 1690 may include a wireless communication module 1692 (e.g., a cellular communication module, a short-range wireless communication module, or a global navigation satellite system (GNSS) communication module) or a wired communication module 1694 (e.g., a local area network (LAN) communication module or a power line communication (PLC) module). A corresponding one of these communication modules may communicate with the external electronic device via the first network 1698 (e.g., a short-range communication network, such as Bluetooth^{™}, wireless-fidelity (Wi-Fi) direct, or infrared data association (IrDA)) or the second network 1699 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1692 may identify and authenticate the electronic device 1601 in a communication network, such as the first network 1698 or the second network 1699, using subscriber information (e.g., international mobile subscriber identity (IMSI)) stored in the subscriber identification module 1696.

The wireless communication module 1692 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1692 may support a high-frequency band (e.g., the mmWave band) to achieve, e.g., a high data transmission rate. The wireless communication module 1692 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1692 may support various requirements specified in the electronic device 1601, an external electronic device (e.g., the electronic device 1604), or a network system (e.g., the second network 1699). According to an embodiment, the wireless communication module 1692 may support a peak data rate (e.g., 20Gbps or more) for implementing eMBB, loss coverage (e.g., 1664dB or less) for implementing mMTC, or U-plane latency (e.g., 0.5ms or less for each of downlink (DL) and uplink (UL), or a round trip of 16ms or less) for implementing URLLC.

The antenna module 1697 may transmit or receive a signal or power to or from the outside (e.g., the external electronic device) of the electronic device 1601. According to an embodiment, the antenna module 1697 may include an antenna including a radiating element composed of a conductive material or a conductive pattern formed in or on a substrate (e.g., a printed circuit board (PCB)). According to an embodiment, the antenna module 1697 may include a plurality of antennas (e.g., array antennas). In such a case, at least one antenna appropriate for a communication scheme used in the communication network, such as the first network 1698 or the second network 1699, may be selected, for example, by the communication module 1690 (e.g., the wireless communication module 1692) from the plurality of antennas. The signal or the power may then be transmitted or received between the communication module 1690 and the external electronic device via the selected at least one antenna. According to an embodiment, another component (e.g., a radio frequency integrated circuit (RFIC)) other than the radiating element may be additionally formed as part of the antenna module 1697.

According to various embodiments, the antenna module 1697 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1601 and the external electronic device 1604 via the server 1608 coupled with the second network 1699. Each of the electronic devices 1602 or 1604 may be a device of a same type as, or a different type, from the electronic device 1601. According to an embodiment, all or some of operations to be executed at the electronic device 1601 may be executed at one or more of the external electronic devices 1602, 1604, or 1608. For example, if the electronic device 1601 should perform a function or a service automatically, or in response to a request from a user or another device, the electronic device 1601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1601. The electronic device 1601 may provide the outcome, with or without further processing of the outcome, as at least part of a reply to the request. To that end, a cloud computing, distributed computing, mobile edge computing (MEC), or client-server computing technology may be used, for example. The electronic device 1601 may provide ultra low-latency services using, e.g., distributed computing or mobile edge computing. In another embodiment, the external electronic device 1604 may include an internet-of-things (IoT) device. The server 1608 may be an intelligent server using machine learning and/or a neural network. According to an embodiment, the external electronic device 1604 or the server 1608 may be included in the second network 1699. The electronic device 1601 may be applied to intelligent services (e.g., smart home, smart city, smart car, or healthcare) based on 5G communication technology or IoT-related technology.

FIG. 17 is a block diagram 1700 illustrating the display module 1660 according to various embodiments. Referring to FIG. 17, the display module 1660 may include a display 1710 and a display driver integrated circuit (DDI) 1730 to control the display 1710. The DDI 1730 may include an interface module 1731, memory 1733 (e.g., buffer memory), an image processing module 1735, or a mapping module 1737. The DDI 1730 may receive image information that contains image data or an image control signal corresponding to a command to control the image data from another component of the electronic device 1601 via the interface module 1731. For example, according to an embodiment, the image information may be received from the processor 1620 (e.g., the main processor 1621 (e.g., an application processor)) or the auxiliary processor 1623 (e.g., a graphics processing unit) operated independently from the function of the main processor 1621. The DDI 1730 may communicate, for example, with touch circuitry 1750 or the sensor module 1676 via the interface module 1731. The DDI 1730 may also store at least part of the received image information in the memory 1733, for example, on a frame by frame basis. The image processing module 1735 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 1710. The mapping module 1737 may generate a voltage value or a current value corresponding to the image data pre-processed or post-processed by the image processing module 1735. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 1710 may be driven, for example, based at least in part on the voltage value or the current value such that visual information (e.g., a text, an image, or an icon) corresponding to the image data may be displayed via the display 1710.

According to an embodiment, the display module 1660 may further include the touch circuitry 1750. The touch circuitry 1750 may include a touch sensor 1751 and a touch sensor IC 1753 to control the touch sensor 1751. The touch sensor IC 1753 may control the touch sensor 1751 to sense a touch input or a hovering input with respect to a certain position on the display 1710. To achieve this, for example, the touch sensor 1751 may detect (e.g., measure) a change in a signal (e.g., a voltage, a quantity of light, a resistance, or a quantity of one or more electric charges) corresponding to the certain position on the display 1710. The touch circuitry 1750 may provide input information (e.g., a position, an area, a pressure, or a time) indicative of the touch input or the hovering input detected via the touch sensor 1751 to the processor 1620. According to an embodiment, at least part (e.g., the touch sensor IC 1753) of the touch circuitry 1750 may be formed as part of the display 1710 or the DDI 1730, or as part of another component (e.g., the auxiliary processor 1623) disposed outside the display module 1660.

According to an embodiment, the display module 1660 may further include at least one sensor (e.g., a fingerprint sensor, an iris sensor, a pressure sensor, or an illuminance sensor) of the sensor module 1676 or a control circuit for the at least one sensor. In such a case, the at least one sensor or the control circuit for the at least one sensor may be embedded in one portion of a component (e.g., the display 1710, the DDI 1730, or the touch circuitry 1750)) of the display module 1660. For example, when the sensor module 1676 embedded in the display module 1660 includes a biometric sensor (e.g., a fingerprint sensor), the biometric sensor may obtain biometric information (e.g., a fingerprint image) corresponding to a touch input received via a portion of the display 1710. As another example, when the sensor module 1676 embedded in the display module 1660 includes a pressure sensor, the pressure sensor may obtain pressure information corresponding to a touch input received via a partial or whole area of the display 1710. According to an embodiment, the touch sensor 1751 or the sensor module 1676 may be disposed between pixels in a pixel layer of the display 1710, or over or under the pixel layer.

The technical problems to be achieved in this document are not limited to those described above, and other technical problems not mentioned herein will be clearly understood by those having ordinary knowledge in the art to which the present disclosure belongs, from the following description.

As described above, an electronic device (e.g., the electronic device 100) may include a processor including processing circuitry (e.g., the second processing circuitry 212), and a touch sensitive display including a display panel (e.g., the display panel 120) having a displaying region, touch processing circuitry (e.g., the first processing circuitry 211), and a touch sensor (e.g., the touch sensor 222) for receiving a touch contact with respect to the displaying region. The touch processing circuitry may be configured to, while the display panel is in a low power state or a power-off state, generate first information on a first touch contact based on signals from the touch sensor, after the first touch contact is released, generate second information on a second touch contact based on signals from the touch sensor, based on a first touch size of the first information and a second touch size of the second information being within a first reference range, determine whether the second touch size is within a second reference range with respect to the first touch size, and based on the second touch size being within the second reference range with respect to the first touch size, provide, to the processor, information on the first touch contact and the second touch contact as a double tap input.

The touch processing circuitry may be configured to, based on the second touch size being outside the second reference range with respect to the first touch size, refrain from providing, to the processor, the information on the first touch contact and the second touch contact.

The touch processing circuitry may be configured to determine whether second time checking the second touch size of the second information within the first reference range is within reference time from first time checking the first touch size of the first information that is within the first reference range, and based on the second time being within the reference time from the first time, compare the second touch size with the first touch size to determine whether the second touch size is within the second reference range with respect to the first touch size.

The touch processing circuitry may be configured to, based on the second time outside the reference time from the first time, refrain from comparing the second touch size with the first touch size to determine whether the second touch size is within the second reference range with respect to the first touch size.

The touch processing circuitry may be configured to, based on the first touch size within the first reference range and the second touch size within the first reference range, determine whether a representative position of second points of contact associated with the second touch contact is within a reference distance from a representative position of first points of contact associated with the first touch contact, and based on the representative position of the second points of contact being within the reference distance from the representative position of the first points of contact, compare the second touch size with the first touch size to determine whether the second touch size is within the second reference range with respect to the first touch size.

The touch processing circuitry may be configured to, based on the representative position of the second points of contact being outside the reference distance from the representative position of the first points of contact, refrain from comparing the second touch size with the first touch size to determine whether the second touch size is within the second reference range with respect to the first touch size.

The touch processing circuitry may be configured to determine whether the first touch size is within the first reference range, determine whether the second touch size is within the first reference range, based on the first touch size being within the first reference range, provide, to the processor, information on the first touch contact as a single tap input, before providing, to the processor, the information on the first touch contact and the second touch contact as the double tap input, and based on the second touch size being within the first reference range, provide, to the processor, information on the second touch contact as a single tap input, before providing, to the processor, the information on the first touch contact and the second touch contact as the double tap input.

The touch processing circuitry may be configured to, based on the first touch size being outside the first reference range, refrain from providing, to the processor, the information on the first touch contact, and refrain from comparing the second touch size with the first touch size to determine whether the second touch size is within the second reference range with respect to the first touch size, and based on the second touch area being outside the first reference range, refrain from providing, to the processor, the information on the second touch contact, and refrain from comparing the second touch size with the first touch size to determine whether the second touch size is within the second reference range with respect to the first touch size.

The processor may be configured to, in response to obtaining, while the display panel is in the low power state, the information from the touch processing circuitry, cause the display panel to change a screen displayed on the display panel from a first screen to a second screen as feedback for the double tap input, and in response to obtaining, while the display panel is in the power-off state, the information from the touch processing circuitry, cause the display panel to display the second screen as feedback for the double tap input.

For example, the second screen comprises a lock screen.

For example, power consumed for displaying on the display panel the second screen may be greater than power consumed for displaying on the display panel the first screen.

The processor may be configured to, while the display panel is in the power-off state, obtain information on the first touch contact provided from the touch processing circuitry as a single tap input based on the first touch size being within the first reference range, while the display panel is in the power-off state, obtain information on the second touch contact provided from the touch processing circuitry as a single tap input based on the second touch size being within the first reference range and being outside the second reference range, and based on the information on the first touch contact, the information on the second touch contact, or a combination thereof, cause the display panel to display the first screen on the display panel as feedback for a single tap input.

The touch processing circuitry may be configured to refrain from providing the information on the first touch contact and the second touch contact to the processor as the double tap input, based on the second touch size being outside the second reference range. The processor may be configured to, based on obtaining the information on the first touch contact and the information on the second touch contact while the display panel is in the power-off state, check whether threshold time elapses, based on obtaining the information on the first touch contact and the second touch contact as the double tap input from the touch processing circuitry before the threshold time elapses, cause the display panel to display the second screen, and based on not obtaining the information on the first touch contact and the second touch contact as the double tap input from the touch processing circuitry until the threshold time elapses, cause the display panel to display the first screen.

The touch processing circuitry may be configured to compare, with a first length indicating a length of a major axis of a first oval corresponding to the first touch size, a second length indicating a length of a major axis of a second oval corresponding to the second touch size in order to determine whether the second touch size is within the second reference range, and based on the second length being within the second reference range determined based on the first length, provide the information to the processor.

The second reference range may be further determined based on a first position of a region formed by at least portion of the first points of contact that is used for determining the first touch size, a second position of a region formed by at least portion of the second points of contact that is used for determining the second touch size, or the first position and the second position.

As described above, an electronic device (e.g., the electronic device 100) may include memory (e.g., the memory 230) storing instructions, a touch sensitive display including a display panel (e.g., the display panel 120) having a displaying region and a touch sensor (e.g., the touch sensor 222) for receiving a touch contact with respect to the displaying region, and one or more processors including one or more processing circuitry (e.g., the first processing circuitry 211 and/or the second processing circuitry 212). The instructions, when executed individually or collectively by the one or more processors while the display panel is in a low power state or a power-off state, may cause the electronic device to generate first information on a first touch contact based on signals from the touch sensor, generate second information on a second touch contact based on signals from the touch sensor after the first touch contact is released, provide feedback for a double tap input based on a first touch size of the first information within the first reference range and a second touch size of the second information within the first reference range and within a second reference range included in the first reference range, and provide feedback for a single tap input based on the first touch size within the first reference range and the second touch size within the first reference range and outside the second reference range.

The second reference range may be narrower than or equal to the first reference range according to the first touch size.

For example, the second reference range when the first touch size is within a central range of the first reference range may be partially different from the second reference range when the first touch size is within a peripheral range of the first reference range.

For example, the instructions, when executed individually or collectively by the one or more processors while the display panel is in the power-off state, may cause the electronic device to, in order to provide the feedback for the single tap input, change a state of the display panel from the power-off state to the low power state and display a first screen on the display panel in the low power state, and in order to provide the feedback for the double tap input, change the state of the display panel from the power-off state to a normal power state and display a second screen on the display panel in the normal power state.

For example, the instructions, when executed individually or collectively by the one or more processors while the display panel is in the low power state, may cause the electronic device to, in order to provide the feedback for the single tap input, maintain the state of the display panel as the low power state and maintain displaying the first screen on the display panel maintained in the low power state, and in order to provide the feedback for the double tap input, change the state of the display panel from the low power state to the normal power state and display the second screen on the display panel in the normal power state changed from the low power state.

The instructions, when executed individually or collectively by the one or more processors while the display panel is in the low power state or the power-off state, may cause the electronic device to refrain from providing the feedback for the single tap input and the feedback for the double tap input, based on the first touch size outside the first reference range, the second touch size outside the first reference range, or a combination thereof.

The one or more processing circuitry may include touch processing circuitry in the touch circuitry and processing circuitry outside the touch circuitry. The instructions, when executed individually or collectively by the one or more processors while the display panel is in the low power state or the power-off state, may cause the electronic device to, based on the first touch size within the first reference range and the second touch size within the first reference range and within the second reference range, generate, using the touch processing circuitry, information on the first touch contact and the second touch contact to recognize as the double tap input, provide the information from the touch processing circuitry to the processing circuitry, and provide, using the processing circuitry, the feedback for the double tap input according to the information.

The effects that can be obtained from the present disclosure are not limited to those described above, and any other effects not mentioned herein will be clearly understood by those having ordinary knowledge in the art to which the present disclosure belongs, from the following description.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device (or processing circuitry) may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program #40) including one or more instructions that are stored in a storage medium (e.g., internal memory #36 or external memory #38) that is readable by a machine (e.g., the electronic device #01). For example, a processor (e.g., the processor #20) of the machine (e.g., the electronic device #01) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a processor including processing circuitry, and
a touch sensitive display including:
a display panel having a displaying region;
touch processing circuitry; and
a touch sensor for receiving a touch contact with respect to the displaying region,
wherein the touch processing circuitry is configured to, while the display panel is in a low power state or a power-off state:
generate first information on a first touch contact based on signals from the touch sensor;
after the first touch contact is released, generate second information on a second touch contact based on signals from the touch sensor;
based on a first touch size of the first information and a second touch size of the second information being within a first reference range, determine whether the second touch size is within a second reference range with respect to the first touch size; and
based on the second touch size being within the second reference range with respect to the first touch size, provide, to the processor, information on the first touch contact and the second touch contact as a double tap input.

2. The electronic device of claim 1, wherein the touch processing circuitry is further configured to:
based on the second touch size being outside the second reference range with respect to the first touch size, refrain from providing, to the processor, the information on the first touch contact and the second touch contact.

3. The electronic device of claim 1, wherein the touch processing circuitry is configured to:
determine whether second time checking the second touch size of the second information within the first reference range is within reference time from first time checking the first touch size of the first information that is within the first reference range; and
based on the second time being within the reference time from the first time, compare the second touch size with the first touch size to determine whether the second touch size is within the second reference range with respect to the first touch size.

4. The electronic device of claim 3, wherein the touch processing circuitry is further configured to:
based on the second time outside the reference time from the first time, refrain from comparing the second touch size with the first touch size to determine whether the second touch size is within the second reference range with respect to the first touch size.

5. The electronic device of claim 1, wherein the touch processing circuitry is configured to:
based on the first touch size within the first reference range and the second touch size within the first reference range, determine whether a representative position of second points of contact associated with the second touch contact is within a reference distance from a representative position of first points of contact associated with the first touch contact; and
based on the representative position of the second points of contact being within the reference distance from the representative position of the first points of contact, compare the second touch size with the first touch size to determine whether the second touch size is within the second reference range with respect to the first touch size.

6. The electronic device of claim 5, wherein the touch processing circuitry is further configured to:
based on the representative position of the second points of contact being outside the reference distance from the representative position of the first points of contact, refrain from comparing the second touch size with the first touch size to determine whether the second touch size is within the second reference range with respect to the first touch size.

7. The electronic device of claim 1, wherein the touch processing circuitry is configured to:
determine whether the first touch size is within the first reference range;
determine whether the second touch size is within the first reference range;
based on the first touch size being within the first reference range, provide, to the processor, information on the first touch contact as a single tap input, before providing, to the processor, the information on the first touch contact and the second touch contact as the double tap input; and
based on the second touch size being within the first reference range, provide, to the processor, information on the second touch contact as a single tap input, before providing, to the processor, the information on the first touch contact and the second touch contact as the double tap input.

8. The electronic device of claim 7, wherein the touch processing circuitry is further configured to:
based on the first touch size being outside the first reference range:
refrain from providing, to the processor, the information on the first touch contact; and
refrain from comparing the second touch size with the first touch size to determine whether the second touch size is within the second reference range with respect to the first touch size, and
based on the second touch area being outside the first reference range:
refrain from providing, to the processor, the information on the second touch contact; and
refrain from comparing the second touch size with the first touch size to determine whether the second touch size is within the second reference range with respect to the first touch size.

9. The electronic device of claim 1, wherein the processor is configured to:
in response to obtaining, while the display panel is in the low power state, the information from the touch processing circuitry, cause the display panel to change a screen displayed on the display panel from a first screen to a second screen as feedback for the double tap input; and
in response to obtaining, while the display panel is in the power-off state, the information from the touch processing circuitry, cause the display panel to display the second screen as feedback for the double tap input.

10. The electronic device of claim 9, wherein the second screen comprises a lock screen.

11. The electronic device of claim 9, wherein power consumed for displaying on the display panel the second screen is greater than power consumed for displaying on the display panel the first screen.

12. The electronic device of claim 9, wherein the processor is further configured to:
while the display panel is in the power-off state, obtain information on the first touch contact provided from the touch processing circuitry as a single tap input based on the first touch size being within the first reference range;
while the display panel is in the power-off state, obtain information on the second touch contact provided from the touch processing circuitry as a single tap input based on the second touch size being within the first reference range and being outside the second reference range; and
based on the information on the first touch contact, the information on the second touch contact, or a combination thereof, cause the display panel to display the first screen on the display panel as feedback for a single tap input.

13. The electronic device of claim 12, wherein the touch processing circuitry is further configured to refrain from providing the information on the first touch contact and the second touch contact to the processor as the double tap input, based on the second touch size being outside the second reference range, and
wherein the processor is further configured to:
based on obtaining the information on the first touch contact and the information on the second touch contact while the display panel is in the power-off state, check whether threshold time elapses;
based on obtaining the information on the first touch contact and the second touch contact as the double tap input from the touch processing circuitry before the threshold time elapses, cause the display panel to display the second screen; and
based on not obtaining the information on the first touch contact and the second touch contact as the double tap input from the touch processing circuitry until the threshold time elapses, cause the display panel to display the first screen.

14. The electronic device of claim 1, wherein the touch processing circuitry is configured to:
compare, with a first length indicating a length of a major axis of a first oval corresponding to the first touch size, a second length indicating a length of a major axis of a second oval corresponding to the second touch size in order to determine whether the second touch size is within the second reference range; and
based on the second length being within the second reference range determined based on the first length, provide the information to the processor.

15. The electronic device of claim 1, wherein the second reference range is further determined based on a first position of a region formed by at least portion of the first points of contact that is used for determining the first touch size, a second position of a region formed by at least portion of the second points of contact that is used for determining the second touch size, or the first position and the second position.
